# EUROPEAN PATENT APPLICATION

(11) **EP 4 672 054 A1**
(43) Date of publication of application: **31.12.2025**
(21) Application number: 25184274.6
(22) Date of filing: 20.06.2025
(51) Int. Cl.: G06F 21/55, G06N 20/00, H04L 9/40

(54) **AI-BASED MALICIOUS ACTIVITY DETECTION USING A THREAT ACTOR PROFILE**

(30) Priority: 28.06.2024 US 202418759729
(71) Applicant: Microsoft Technology Licensing, LLC, Redmond, WA 98052 (US)
(72) Inventor: AHMAD, NAVEED AZEEMI, Redmond, 98052 (US); GREENWALD, LLOYD GEOFFREY, Redmond, 98052 (US); BULUT, MUHAMMED FATIH, Redmond, 98052 (US); LIU, YINGQI, Redmond, 98052 (US); TAMERSOY, ACAR, Redmond, 98052 (US)
(74) Representative: CMS Cameron McKenna Nabarro Olswang LLP

(57) **Abstract**

Techniques are described herein that are capable of performing AI-based malicious activity detection using a threat actor profile. An alert is received. The alert indicates that a potentially anomalous event has occurred with regard to an entity. A profile of a threat actor is generated using information that describes behavior of the threat actor. An artificial intelligence (AI) model is triggered to determine whether the threat actor performs a malicious activity with regard to the entity by providing an AI prompt as an input to the AI model. The AI prompt includes the profile of the threat actor and a description of the potentially anomalous event. The AI prompt requests a determination whether the threat actor performs the malicious activity with regard to the entity.

## Description

### BACKGROUND

Cybersecurity includes measures that are taken to protect a system (e.g., a computer or a network) from cyberattacks (a.k.a. attacks, digital attacks, or malicious attacks). One common challenge that such measures seek to address is detection of malicious activities with regard to the system. Conventional techniques for detecting malicious activities sometimes result in a substantial number of false positives. A false positive is an incorrect determination that a non-malicious activity is malicious. It may be desirable to reduce the number of false positives that are produced by the conventional techniques. For instance, reducing the number of false positives may enable security teams to concentrate on the most crucial matters (e.g., activities that are indeed malicious). By concentrating on the most crucial matters, the security of the system may be increased.

### SUMMARY

Artificial intelligence (AI) is intelligence of a machine (e.g., a computing system) and/or code (e.g., software and/or firmware), as opposed to intelligence of a living creature (e.g., a human). An AI prompt indicates (e.g., specifies) a task that is to be performed by an AI model. Examples of an AI prompt include but are not limited to a zero-shot prompt, a one-shot prompt, and a few-shot prompt. A zero-shot prompt is a prompt for which the prompt and/or its corresponding contextual information, which are to be processed by the AI model, is not included in pre-trained knowledge of the AI model. A one-shot prompt is a prompt that includes a target prompt along with a single example prompt and a single example answer that is responsive to the single example prompt. The example prompt and the example answer provide guidance as to how the AI model is expected to respond to the target prompt. A few-shot prompt is a prompt that includes a target prompt along with multiple example prompts and multiple example answers that are responsive to the respective example prompts. The example prompts and the example answers provide guidance as to how the AI model is expected to respond to the target prompt.

An AI prompt may be a natural language prompt. A natural language prompt is a prompt that is written in a natural language. A natural language is a human language that has developed through use and repetition. For instance, the natural language may have developed naturally without conscious planning or premeditation. Examples of a natural language include English, French, Spanish, and Mandarin. In an aspect, the natural language prompt is generated by a user (e.g., a human). In another aspect, the natural language prompt is generated by a computing system (e.g., an AI assistant that runs on the computing system).

An AI prompt may not be written in a natural language. For instance, the AI prompt may include (e.g., be) computer code. The AI prompt may be any suitable sequence of characters that is capable of being interpreted by an AI model.

An AI model is a model that utilizes artificial intelligence to generate an answer that is responsive to an AI prompt (a.k.a. prompt) that is received by the AI model. The AI model may be an artificial general intelligence model. An artificial general intelligence model is an AI model (e.g., an autonomous AI model) that is configured to be capable of performing any task that an intelligent being (e.g., a human) is capable of performing. In an example implementation, the artificial general intelligence model is capable of performing a task that surpasses the capabilities of an animal.

It may be desirable to use one or more AI models to detect malicious activity of a threat actor by using a profile of the threat actor. A threat actor is an entity (e.g., a person, a group of people, or a system (e.g., an autonomous agent)) that intentionally causes (or tries to cause or is configured to cause) harm to a system. For instance, the threat actor may exploit a vulnerability of the system to perpetuate a cyberattack. Examples of a cyberattack include but are not limited to a denial of service (DoS) attack, a distributed DoS (DDoS) attack, a man-in-the-middle (MITM) attack, a malware attack, a phishing attack, a ransomware attack, and a cross-site scripting (XSS) attack. A DoS attack is an attack that renders a system unable to respond to a legitimate service request by overwhelming resource(s) of the system. A DDoS attack is similar to a DoS attack but involves multiple (e.g., a vast array) malware-infected hosts that are controlled by the threat actor to cause resource exhaustion. An MITM attack is an attack that enables the threat actor to eavesdrop on data exchanged between multiple entities (e.g., people, networks, or computers). A malware attack is an attack in which malicious software is introduced (e.g., injected) to a system to damage the system and/or to steal information from the system. A phishing attack is an attack in which a deceptive communication (e.g., an electronic mail (a.k.a. email) message) is provided to an entity to trick the entity into revealing sensitive information or into downloading malware. A ransomware attack is an attack that encrypts file(s) and/or system(s) and demands payment (a.k.a. a ransom) for decryption. An XSS attack exploits a vulnerability of a web application to introduce a malicious script into a web page that is viewed by other users.

The profile of the threat actor indicates (e.g., specifies or describes) one or more attributes of the threat actor. Examples of an attribute of a threat actor include but are not limited to a type of attack that the threat actor is known to have performed (e.g., commonly performs); a motivation of the threat actor; known targets of the threat actor; tactics, techniques, and procedures (TTPs) that have been utilized (e.g., are commonly utilized) by the threat actor; groups with which the threat actor is associated; TTPs, motivations, and targets of those groups; and types of attacks performed by those groups. Motivations of threat actors may be defined by respective threat actor types. Examples of a threat actor type include but are not limited to a cybercriminal, a nation-state actor, a hacktivist, a cyberterrorist, a corporate insider, or a thrill seeker. A cybercriminal is a threat actor who commits cybercrimes. A nation-state actor is a threat actor who is funded by a nation state or government to attack another government's critical infrastructure. A hacktivist is a threat actor who uses hacking techniques to promote a political or social agenda. A cyberterrorist is a threat actor who engages in politically or ideologically motivated attacks that threaten or result in violence. A corporate insider is a threat actor who innocently or maliciously engages in an attack against a corporation that employs the corporate insider (e.g., by installing malware on a corporate system, stealing data, or damaging data or an application of the corporation). A thrill seeker is a threat actor who engages in an attack for fun.

TTPs of an entity (e.g., the threat actor) may include strategic plans, methodologies, and actions that the entity uses to develop and conduct a cyberattack. The relationship between tactics, techniques, and procedures is hierarchical. For instance, the tactics are used to select the techniques, and the techniques are used to inform the development of procedures. A tactic is a plan that indicates what is going to happen and why it is going to happen. A technique is a particular method to execute a tactic. A procedure is an action plan that describes steps that are to be performed to execute a particular technique. The MITRE Corporation has published an Adversarial Tactics, Techniques, and Common Knowledge (ATT&CK) framework, which details a variety of TTPs associated with threat actor groups.

AI model(s) may be used to compare the profile of the threat actor and an event that has been flagged as being potentially anomalous to determine whether the threat actor is likely to have engaged in a malicious attack. For instance, if attributes of the threat actor, as indicated by the profile of the threat actor, sufficiently correspond to attributes of the event that has been flagged, the AI model(s) may determine that the threat actor is likely to have engaged in the malicious attack. The AI model(s) may compare embedding(s) that represents the profile of the threat actor and embedding(s) that represent the potentially anomalous event to determine similarities and differences therebetween. The AI model(s) may make the determination based on (e.g., based at least on) the similarities and the differences.

Various approaches are described herein for, among other things, performing AI-based malicious activity detection using a threat actor profile. In an example approach, an alert is received. The alert indicates that a potentially anomalous event has occurred with regard to an entity. A profile of a threat actor is generated using information that describes behavior of the threat actor. An artificial intelligence (AI) model is triggered to determine whether the threat actor performs malicious activity with regard to the entity by providing an AI prompt as an input to the AI model. The AI prompt comprises the profile of the threat actor and a description of the potentially anomalous event. The AI prompt requests that the AI model determine whether the threat actor performs the malicious activity with regard to the entity.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Moreover, it is noted that the invention is not limited to the specific embodiments described in the Detailed Description and/or other sections of this document. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form part of the specification, illustrate embodiments of the present invention and, together with the description, further serve to explain the principles involved and to enable a person skilled in the relevant art(s) to make and use the disclosed technologies.
FIG. 1 is a block diagram of an example threat actor profile-based maliciousness detection system in accordance with an embodiment.
FIGS. 2-3 depict flowcharts of example methods for performing AI-based malicious activity detection using a threat actor profile in accordance with embodiments.
FIG. 4 is a block diagram of an example computing system in accordance with an embodiment.
FIG. 5 is a system diagram of an example mobile device in accordance with an embodiment.
FIG. 6 depicts an example computer in which embodiments may be implemented.

The features and advantages of the disclosed technologies will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

### I. Example Embodiments

Artificial intelligence (AI) is intelligence of a machine (e.g., a computing system) and/or code (e.g., software and/or firmware), as opposed to intelligence of a living creature (e.g., a human). An AI prompt indicates (e.g., specifies) a task that is to be performed by an AI model. Examples of an AI prompt include but are not limited to a zero-shot prompt, a one-shot prompt, and a few-shot prompt. A zero-shot prompt is a prompt for which the prompt and/or its corresponding contextual information, which are to be processed by the AI model, is not included in pre-trained knowledge of the AI model. A one-shot prompt is a prompt that includes a target prompt along with a single example prompt and a single example answer that is responsive to the single example prompt. The example prompt and the example answer provide guidance as to how the AI model is expected to respond to the target prompt. A few-shot prompt is a prompt that includes a target prompt along with multiple example prompts and multiple example answers that are responsive to the respective example prompts. The example prompts and the example answers provide guidance as to how the AI model is expected to respond to the target prompt.

An AI prompt may be a natural language prompt. A natural language prompt is a prompt that is written in a natural language. A natural language is a human language that has developed through use and repetition. For instance, the natural language may have developed naturally without conscious planning or premeditation. Examples of a natural language include English, French, Spanish, and Mandarin. In an aspect, the natural language prompt is generated by a user (e.g., a human). In another aspect, the natural language prompt is generated by a computing system (e.g., an AI assistant that runs on the computing system).

An AI prompt may not be written in a natural language. For instance, the AI prompt may include (e.g., be) computer code. The AI prompt may be any suitable sequence of characters that is capable of being interpreted by an AI model.

An AI model is a model that utilizes artificial intelligence to generate an answer that is responsive to an AI prompt (a.k.a. prompt) that is received by the AI model. The AI model may be an artificial general intelligence model. An artificial general intelligence model is an AI model (e.g., an autonomous AI model) that is configured to be capable of performing any task that an intelligent being (e.g., a human) is capable of performing. In an example implementation, the artificial general intelligence model is capable of performing a task that surpasses the capabilities of an animal.

It may be desirable to use one or more AI models to detect malicious activity of a threat actor by using a profile of the threat actor. A threat actor is an entity (e.g., a person, a group of people, or a system (e.g., an autonomous agent)) that intentionally causes (or tries to cause or is configured to cause) harm to a system. For instance, the threat actor may exploit a vulnerability of the system to perpetuate a cyberattack. Examples of a cyberattack include but are not limited to a denial of service (DoS) attack, a distributed DoS (DDoS) attack, a man-in-the-middle (MITM) attack, a malware attack, a phishing attack, a ransomware attack, and a cross-site scripting (XSS) attack. A DoS attack is an attack that renders a system unable to respond to a legitimate service request by overwhelming resource(s) of the system. A DDoS attack is similar to a DoS attack but involves multiple (e.g., a vast array) malware-infected hosts that are controlled by the threat actor to cause resource exhaustion. An MITM attack is an attack that enables the threat actor to eavesdrop on data exchanged between multiple entities (e.g., people, networks, or computers). A malware attack is an attack in which malicious software is introduced (e.g., injected) to a system to damage the system and/or to steal information from the system. A phishing attack is an attack in which a deceptive communication (e.g., an electronic mail (a.k.a. email) message) is provided to an entity to trick the entity into revealing sensitive information or into downloading malware. A ransomware attack is an attack that encrypts file(s) and/or system(s) and demands payment (a.k.a. a ransom) for decryption. An XSS attack exploits a vulnerability of a web application to introduce a malicious script into a web page that is viewed by other users.

The profile of the threat actor indicates (e.g., specifies or describes) one or more attributes of the threat actor. Examples of an attribute of a threat actor include but are not limited to a type of attack that the threat actor is known to have performed (e.g., commonly performs); a motivation of the threat actor; known targets of the threat actor; tactics, techniques, and procedures (TTPs) that have been utilized (e.g., are commonly utilized) by the threat actor; groups with which the threat actor is associated; TTPs, motivations, and targets of those groups; and types of attacks performed by those groups. Motivations of threat actors may be defined by respective threat actor types. Examples of a threat actor type include but are not limited to a cybercriminal, a nation-state actor, a hacktivist, a cyberterrorist, a corporate insider, or a thrill seeker. A cybercriminal is a threat actor who commits cybercrimes. A nation-state actor is a threat actor who is funded by a nation state or government to attack another government's critical infrastructure. A hacktivist is a threat actor who uses hacking techniques to promote a political or social agenda. A cyberterrorist is a threat actor who engages in politically or ideologically motivated attacks that threaten or result in violence. A corporate insider is a threat actor who innocently or maliciously engages in an attack against a corporation that employs the corporate insider (e.g., by installing malware on a corporate system, stealing data, or damaging data or an application of the corporation). A thrill seeker is a threat actor who engages in an attack for fun.

TTPs of an entity (e.g., the threat actor) may include strategic plans, methodologies, and actions that the entity uses to develop and conduct a cyberattack. The relationship between tactics, techniques, and procedures is hierarchical. For instance, the tactics are used to select the techniques, and the techniques are used to inform the development of procedures. A tactic is a plan that indicates what is going to happen and why it is going to happen. A technique is a particular method to execute a tactic. A procedure is an action plan that describes steps that are to be performed to execute a particular technique. The MITRE Corporation has published an Adversarial Tactics, Techniques, and Common Knowledge (ATT&CK) framework, which details a variety of TTPs associated with threat actor groups.

AI model(s) may be used to compare the profile of the threat actor and an event that has been flagged as being potentially anomalous to determine whether the threat actor is likely to have engaged in a malicious attack. For instance, if attributes of the threat actor, as indicated by the profile of the threat actor, sufficiently correspond to attributes of the event that has been flagged, the AI model(s) may determine that the threat actor is likely to have engaged in the malicious attack. The AI model(s) may compare embedding(s) that represents the profile of the threat actor and embedding(s) that represent the potentially anomalous event to determine similarities and differences therebetween. The AI model(s) may make the determination based on (e.g., based at least on) the similarities and the differences.

Example embodiments described herein are capable of performing AI-based malicious activity detection using a threat actor profile. In an example approach, an alert is received. The alert indicates that a potentially anomalous event has occurred with regard to an entity. A profile of a threat actor is generated using information that describes behavior of the threat actor. An artificial intelligence (AI) model is triggered to determine whether the threat actor performs malicious activity with regard to the entity by providing an AI prompt as an input to the AI model. The AI prompt comprises the profile of the threat actor and a description of the potentially anomalous event. The AI prompt requests that the AI model determine whether the threat actor performs the malicious activity with regard to the entity.

Example techniques described herein have a variety of benefits as compared to conventional techniques for detecting malicious activity. For instance, the example techniques are capable of reducing a number of false positives in which a non-malicious activity is classified as being malicious (or attributable to a particular threat actor) and/or increasing a number of true positives in which a malicious activity is classified as being malicious (or attributable to the particular threat actor). By using a profile of a threat actor to determine whether the threat actor performs malicious activity with regard to an entity, the example techniques may be capable of making the determination more accurately, precisely, and/or reliably than conventional techniques.

The example techniques may reduce an amount of time and/or resources (e.g., processor cycles, memory, network bandwidth) that is consumed to determine whether a threat actor performs malicious activity with regard to an entity. For instance, by providing an AI prompt, which includes a profile of the threat actor and a description of a potentially anomalous event, as an input to the AI model, the number of operations that are performed to determine whether the threat actor performs the malicious activity with regard to the entity may be reduced. Causing (e.g., triggering) the AI model to use the profile of the threat actor and the description of the potentially anomalous event may increase accuracy, precision, and/or reliability of a determination made by the AI model with regard to whether the threat actor performs the malicious activity with regard to the entity. The AI model may be triggered to use other contextual information, such as logs associated with the entity, in combination with the profile of the threat actor and the description of the potentially anomalous event to make the determination. By using such other contextual information, the example techniques may further increase accuracy, precision, and/or reliability of the determination made by the AI model. By reducing the amount of time and/or resources that is consumed by a computing system to determine whether the threat actor performs the malicious activity with regard to the entity, the efficiency of the computing system may be increased.

By reducing the amount of time that is consumed to determine whether the threat actor performs the malicious activity with regard to the entity, the example techniques may increase a user experience and/or efficiency of an information technology (IT) professional who manages security of a system that includes (e.g., stores) or accesses the entity. The example techniques may increase a user experience and/or efficiency of an end user who accesses the entity, for example, by increasing security of the entity. The user experience and/or the efficiency of the IT professional and/or the end user may be increased in other ways, as well. For example, the user experience and/or the efficiency may be increased through a more accurate, precise, and/or reliable determination as to whether the threat actor performs the malicious activity with regard to the entity. In another example, the user experience and/or the efficiency may be increased by reducing the number of false positives that are produced when determining whether threat actors perform malicious activities with regard to entities. For instance, by reducing the number of false positives, an IT professional may focus on other tasks, which may increase security of a system that the IT professional manages.

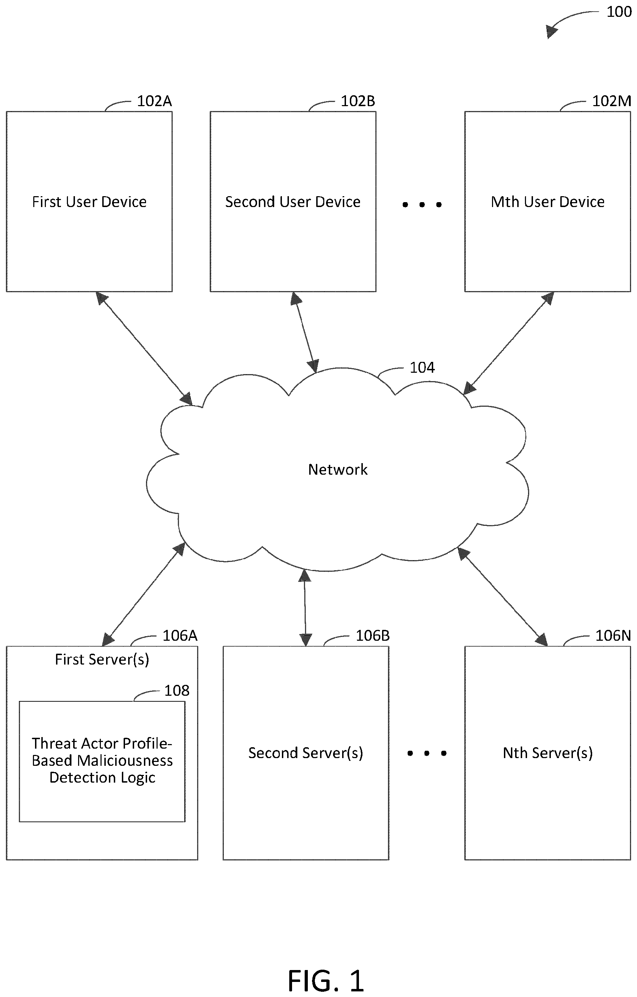

FIG. 1 is a block diagram of an example threat actor profile-based maliciousness detection system 100 in accordance with an embodiment. Generally speaking, the threat actor profile-based maliciousness detection system 100 operates to provide information to users in response to requests (e.g., hypertext transfer protocol (HTTP) requests) that are received from the users. The information may include documents (Web pages, images, audio files, video files, etc.), output of executables, and/or any other suitable type of information. In accordance with example embodiments described herein, the threat actor profile-based maliciousness detection system 100 performs AI-based malicious activity detection using a threat actor profile. Detail regarding techniques for performing AI-based malicious activity detection using a threat actor profile is provided in the following discussion.

As shown in FIG. 1, the threat actor profile-based maliciousness detection system 100 includes a plurality of user devices 102A-102M, a network 104, and a plurality of servers 106A-106N. Communication among the user devices 102A-102M and the servers 106A-106N is carried out over the network 104 using well-known network communication protocols. The network 104 may be a wide-area network (e.g., the Internet), a local area network (LAN), another type of network, or a combination thereof.

The user devices 102A-102M are computing systems that are capable of communicating with servers 106A-106N. A computing system is a system that includes at least a portion of a processor system such that the portion of the processor system includes at least one processor that is capable of manipulating data in accordance with a set of instructions. A processor system includes one or more processors, which may be on a same (e.g., single) device or distributed among multiple (e.g., separate) devices. For instance, a computing system may be a computer, a personal digital assistant, etc. The user devices 102A-102M are configured to provide requests to the servers 106A-106N for requesting information stored on (or otherwise accessible via) the servers 106A-106N. For instance, a user may initiate a request for executing a computer program (e.g., an application) using a client (e.g., a Web browser, Web crawler, or other type of client) deployed on a user device 102 that is owned by or otherwise accessible to the user. In accordance with some example embodiments, the user devices 102A-102M are capable of accessing domains (e.g., Web sites) hosted by the servers 104A-104N, so that the user devices 102A-102M may access information that is available via the domains. Such domain may include Web pages, which may be provided as hypertext markup language (HTML) documents and objects (e.g., files) that are linked therein, for example.

Each of the user devices 102A-102M may include any client-enabled system or device, including but not limited to a desktop computer, a laptop computer, a tablet computer, a wearable computer such as a smart watch or a head-mounted computer, a personal digital assistant, a cellular telephone, an Internet of things (IoT) device, or the like. It will be recognized that any one or more of the user devices 102A-102M may communicate with any one or more of the servers 106A-106N.

The servers 106A-106N are computing systems that are capable of communicating with the user devices 102A-102M. The servers 106A-106N are configured to execute computer programs that provide information to users in response to receiving requests from the users. For example, the information may include documents (Web pages, images, audio files, video files, etc.), output of executables, or any other suitable type of information. In accordance with some example embodiments, the servers 106A-106N are configured to host respective Web sites, so that the Web sites are accessible to users of the threat actor profile-based maliciousness detection system 100.

One example type of computer program that may be executed by one or more of the servers 106A-106N is a computer security program. A computer security program is a computer program that provides security with regard to information and/or communications associated with a computing system. For instance, the information associated with the computing system may include information stored on the computing system and/or information accessed (e.g., read) by the computing system. The communications associated with the computing system may include communications received by the computing system and/or communications provided (e.g., transmitted) by the computing system. An example of a communication is an electronic message. Examples of a computer security program include Bitdefender^{®} security program, developed and distributed by Bitdefender IPR Management Ltd.; Norton^{®} security program, developed and distributed by Gen Digital Inc.; Avast^{®} security program, developed and distributed by Avast Software S.R.O.; McAfee^{®} security program, developed and distributed by McAfee, LLC; and Microsoft Defender^{®} security program, developed and distributed by Microsoft Corporation. It will be recognized that the example techniques described herein may be implemented using a computer security program. For instance, a software product (e.g., a subscription service, a non-subscription service, or a combination thereof) may include the computer security program, and the software product may be configured to perform the example techniques, though the scope of the example embodiments is not limited in this respect.

The computer security program may be a cloud native application protection platform (CNAPP). A CNAPP is an all-in-one platform that unifies security and compliance capabilities to prevent, detect, and respond to cloud security threats. A CNAPP integrates multiple cloud security solutions, which traditionally have been siloed, into a common (e.g., single) user interface. The cloud security solutions may include cloud security posture management (CSPM), multipipeline development and operations (DevOps) security, a cloud workload protection platform (CWPP), cloud infrastructure entitlement management (CIEM), and cloud service network security (CSNS). CSPM provides a connected, prioritized view of potential vulnerabilities and misconfigurations across multi-cloud and hybrid environments. The CSPM continuously assesses overall security posture of a system and provides automated alerts and recommendations about critical issues that could expose the system to data breaches. The CSPM may include automated compliance management and remediation tools to identify and remedy compliance deficiencies. Multipipeline DevOps security provides a central console that enables management of DevOps security across multiple (e.g., all) pipelines. For instance, the multipipeline DevOps security may be used to reduce cloud misconfigurations and to scan new code to keep vulnerabilities therein from reaching a production environment. The multipipeline DevOps security may include infrastructure-as-code scanning tools that analyze configuration files from the earliest stages of development to confirm that new configuration files are compliant with security policies. A CWPP provides real-time detection and response to threats based on up-to-date information regarding multi-cloud workloads (e.g., virtual machines, containers, Kubernetes, databases, storage accounts, network layers, and app services). The CWPP may enable a quick investigation into threats and reduce the attack surface of a system. CIEM centralizes permissions management across a cloud and hybrid footprint, which inhibits (e.g., prevents) accidental or malicious misuse of permissions. CSNS complements the CWPP by protecting cloud infrastructure in real time. The CSNS may include any of a variety of security tools, including but not limited to distributed denial-of-service protection, web application firewalls, transport layer security examination, and load balancing.

A computer security program may be incorporated into a cloud computing program (a.k.a. a cloud service). A cloud computing program is a computer program that provides hosted service(s) via a network (e.g., network 104). For instance, the hosted service(s) may be hosted by any one or more of the servers 106A-106N. The cloud computing program may enable users (e.g., at any of the user systems 102A-102M) to access shared resources that are stored on or are otherwise accessible to the server(s) via the network.

The cloud computing program may provide hosted service(s) according to any of a variety of service models, including but not limited to Backend as a Service (BaaS), Software as a Service (SaaS), Platform as a Service (PaaS), and Infrastructure as a Service (IaaS). BaaS enables applications (e.g., software programs) to use a BaaS provider's backend services (e.g., push notifications, integration with social networks, and cloud storage) running on a cloud infrastructure. SaaS enables a user to use a SaaS provider's applications running on a cloud infrastructure. PaaS enables a user to develop and run applications using a PaaS provider's application development environment (e.g., operating system, programming-language execution environment, database) on a cloud infrastructure. IaaS enables a user to use an IaaS provider's computer infrastructure (e.g., to support an enterprise). For example, IaaS may provide to the user virtualized computing resources that utilize the IaaS provider's physical computer resources.

Examples of a cloud computing program include but are not limited to a Google Cloud^{®} program developed and distributed by Google Inc.; an Oracle Cloud^{®} program developed and distributed by Oracle Corporation; an Amazon Web Services^{®} program developed and distributed by Amazon.com, Inc.; a Salesforce^{®} program developed and distributed by Salesforce.com, Inc.; an AppSource^{®} program developed and distributed by Microsoft Corporation; an Azure^{®} program developed and distributed by Microsoft Corporation; a GoDaddy^{®} program developed and distributed by GoDaddy.com LLC; and a Rackspace^{®} program developed and distributed by Rackspace US, Inc. It will be recognized that the example techniques described herein may be implemented using a cloud computing program. For instance, a software product (e.g., a subscription service, a non-subscription service, or a combination thereof) may include the cloud computing program, and the software product may be configured to perform the example techniques, though the scope of the example embodiments is not limited in this respect.

The first server(s) 106A are shown to include threat actor profile-based maliciousness detection logic 108 for illustrative purposes. The threat actor profile-based maliciousness detection logic 108 is configured to perform AI-based malicious activity detection using a threat actor profile. In an example implementation, the threat actor profile-based maliciousness detection logic 108 receives an alert, which indicates that a potentially anomalous event has occurred with regard to an entity. The threat actor profile-based maliciousness detection logic 108 generates a profile of a threat actor using information that describes behavior of the threat actor. The threat actor profile-based maliciousness detection logic 108 triggers an artificial intelligence (AI) model to determine whether the threat actor performs malicious activity with regard to the entity by providing an AI prompt as an input to the AI model. The AI prompt comprises the profile of the threat actor and a description of the potentially anomalous event. The AI prompt requests that the AI model determine whether the threat actor performs the malicious activity with regard to the entity.

The threat actor profile-based maliciousness detection logic 108 may be implemented in various ways to perform AI-based malicious activity detection using a threat actor profile, including being implemented in hardware, software, firmware, or any combination thereof. For example, the threat actor profile-based maliciousness detection logic 108 may be implemented as computer program code configured to be executed in one or more processors. In another example, at least a portion of the threat actor profile-based maliciousness detection logic 108 may be implemented as hardware logic/electrical circuitry. For instance, at least a portion of the threat actor profile-based maliciousness detection logic 108 may be implemented in a field-programmable gate array (FPGA), an application-specific integrated circuit (ASIC), an application-specific standard product (ASSP), a system-on-a-chip system (SoC), a complex programmable logic device (CPLD), etc. Each SoC may include an integrated circuit chip that includes one or more of a processor (a microcontroller, microprocessor, digital signal processor (DSP), etc.), memory, one or more communication interfaces, and/or further circuits and/or embedded firmware to perform its functions.

It will be recognized that the threat actor profile-based maliciousness detection logic 108 may be (or may be included in) a computer security program and/or a cloud computing program, though the scope of the example embodiments is not limited in this respect.

The threat actor profile-based maliciousness detection logic 108 is shown to be incorporated in the first server(s) 106A for illustrative purposes and is not intended to be limiting. It will be recognized that the threat actor profile-based maliciousness detection logic 108 (or any portion(s) thereof) may be incorporated in any one or more of the servers 106A-106N, any one or more of the user devices 102A-102M, or any combination thereof. For example, client-side aspects of the threat actor profile-based maliciousness detection logic 108 may be incorporated in one or more of the user devices 102A-102M, and server-side aspects of threat actor profile-based maliciousness detection logic 108 may be incorporated in one or more of the servers 106A-106N.

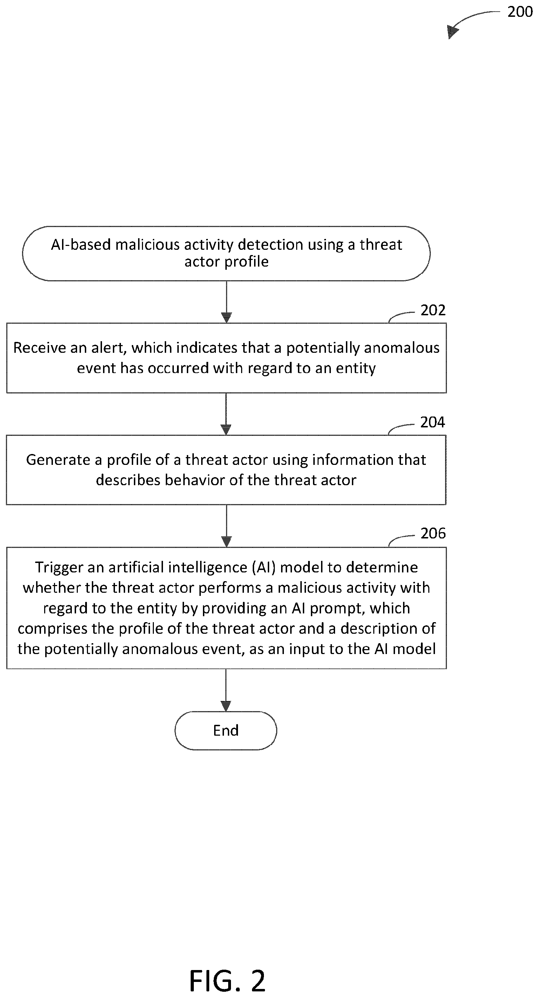

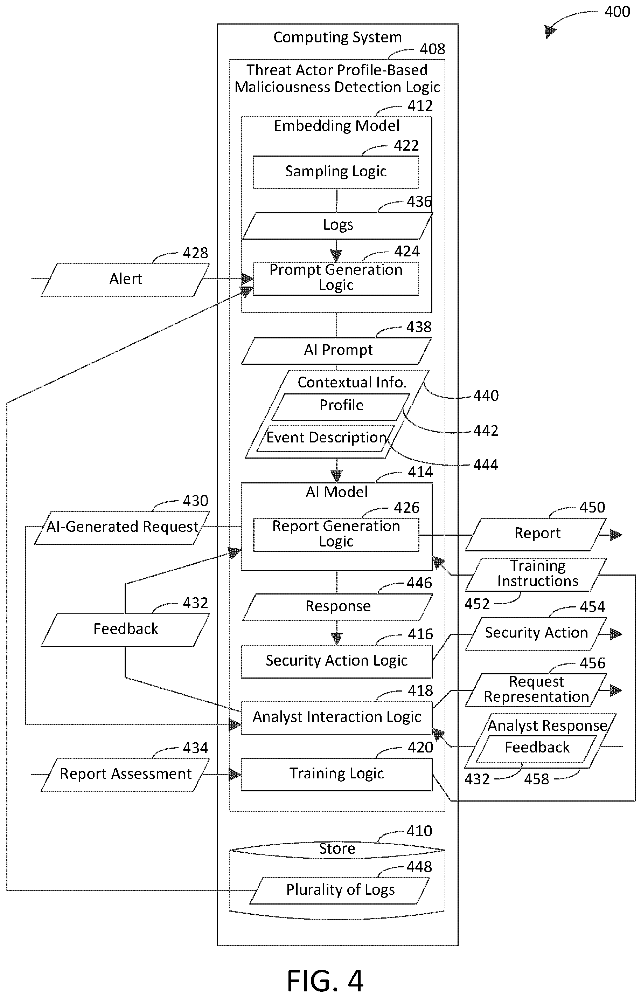

FIGS. 2-3 depict flowcharts 200 and 300 of example methods for performing AI-based malicious activity detection using a threat actor profile in accordance with embodiments. Flowcharts 200 and 300 may be performed by the first server(s) 106A shown in FIG. 1, for example. For illustrative purposes, flowcharts 200 and 300 are described with respect to a computing system 400 shown in FIG. 4, which is an example implementation of the first server(s) 106A. As shown in FIG. 4, the computing system 400 includes threat actor profile-based maliciousness detection logic 408 and a store 410. The threat actor profile-based maliciousness detection logic 408 includes an embedding model 412, an AI model 414, security action logic 416, analyst interaction logic 418, and training logic 420. The embedding model 412 includes sampling logic 422 and prompt generation logic 424. The AI model 418 includes report generation logic 426. The store 410 may be any suitable type of store. One type of store is a database. For instance, the store 410 may be a relational database, an entity-relationship database, an object database, an object relational database, an extensible markup language (XML) database, etc. The store 410 is shown to store a plurality of logs 448 for non-limiting, illustrative purposes. Further structural and operational embodiments will be apparent to persons skilled in the relevant art(s) based on the discussion regarding flowcharts 200 and 300.

As shown in FIG. 2, the method of flowchart 200 begins at step 202. In step 202, an alert is received. The alert indicates that a potentially anomalous event has occurred with regard to an entity. In an aspect, the alert is user-generated, meaning that the alert is generated by a user (e.g., an information technology (IT) professional or an end user). In another aspect, the alert is machine-generated, meaning that the alert is generated by a machine (e.g., computing system). The machine may be a physical machine or a virtual machine. In accordance with this aspect, the alert may be initiated by a computer software program that executes on the machine. The alert may be manually initiated or automatically initiated. Examples of an entity include but are not limited to a user, an application, a computing system, and an Internet Protocol (IP) address. In an example implementation, the prompt generation logic 424 receives an alert 428, which indicates that the potentially anomalous event has occurred with regard to the entity.

At step 204, a profile of a threat actor is generated using information that describes behavior of the threat actor. In an aspect, the information includes historical log(s) that indicate the behavior of the threat actor. Each historical log may indicate events that result from the behavior of the threat actor and each entity that is impacted by the events. For example, each historical log may pertain to a particular period of time. In accordance with this example, events indicated by the respective historical log may have been initiated or detected during the particular period of time. In another aspect, the information includes intelligence report(s) that indicate method(s) used by the threat actor to perform malicious activities. For instance, each intelligence report may be generated by an entity that analyzes tactics, techniques, and procedures (TTPs) employed by the threat actor, and the respective intelligence report may summarize the TTPs. In yet another aspect, the information includes a description of historical attacks (i.e., malicious behavior) associated with the threat actor. In an example implementation, the prompt generation logic 424 generates a profile 442 of the threat actor using the information that describes behavior of the threat actor.

In an example embodiment, generating the profile of the threat actor at step 204 includes triggering the AI model to generate the profile by providing a second AI prompt as an input to the AI model. In an aspect, the second AI prompt includes a historical log that indicates behavior of the threat actor. In another aspect, the second AI prompt includes an intelligence report that indicates a method used by the threat actor to perform a malicious attack. In yet another aspect, the second AI prompt includes information regarding a historical attack associated with the threat actor. In accordance with this embodiment, the second AI prompt requests generation of the profile using a specified structure. For instance, the second AI prompt may request that the AI model generate the profile to have the specified structure.

At step 206, an artificial intelligence (AI) model is triggered to determine whether the threat actor performs a malicious activity with regard to the entity by providing an AI prompt as an input to the AI model. The AI prompt comprises the profile of the threat actor and a description of the potentially anomalous event. The AI prompt requests a determination whether the threat actor performs the malicious activity with regard to the entity. For instance, the AI prompt may request that the AI model determine whether the threat actor performs the malicious activity with regard to the entity. In an example implementation, the prompt generation logic 424 triggers the AI model 414 to determine whether the threat actor performs the malicious activity with regard to the entity by providing an AI prompt 438 as an input to the AI model 414. The AI prompt 438 requests the determination whether the threat actor performs the malicious activity with regard to the entity. For example, the AI prompt 438 may request that the AI model 414 determine whether the threat actor performs the malicious activity with regard to the entity. In an aspect, the AI prompt 438 includes the profile 442 of the threat actor and an event description 444, which describes the potentially anomalous event. In another aspect, the prompt generation logic 424 provides the AI prompt 438 together with contextual information 440 to the AI model 414, as shown in FIG. 4. In accordance with this aspect, the contextual information (e.g., rather than the AI prompt 438) includes the profile 442 of the threat actor and the event description 444. In further accordance with this aspect, the contextual information 440 includes context regarding the AI prompt 438.

In an example embodiment, providing the AI prompt, which comprises the profile of the threat actor and the description of the potentially anomalous event, as the input to the AI model at step 206 reduces a likelihood that a determination of the AI model, which indicates that the threat actor performs the malicious activity with regard to the entity, is a false positive.

In another example embodiment, triggering the AI model to determine whether the threat actor performs the malicious activity with regard to the entity at step 206 includes triggering the AI model to determine that the threat actor performs the malicious activity with regard to the entity as a result of a similarity between the potentially anomalous event and the profile being greater than or equal to a similarity threshold.

In an aspect of this embodiment, the similarity between the potentially anomalous event and the profile is determined based on a distance between a first embedding (a.k.a. token) of the potentially anomalous event and a second embedding of the profile. An embedding is a numerical representation of data (e.g., a description of the potentially anomalous event or the profile). For instance, the embedding may be generated by converting the data (e.g., text) into a vector (e.g., an array of numbers). In an aspect, the embedding represents the meaning and the context of the data. In accordance with this aspect, the distance between the first embedding and the second embedding being greater than or equal to a distance threshold corresponds to the similarity between the potentially anomalous event and the profile being greater than or equal to the similarity threshold. In further accordance with this aspect, the distance between the first embedding and the second embedding being less than the distance threshold corresponds to the similarity between the potentially anomalous event and the profile being less than the similarity threshold.

The distance between the first embedding and the second embedding may be any suitable type of distance, including but not limited to a Euclidian distance (a.k.a. Pythagorean distance), a Manhattan distance, or a Cosine distance. A Euclidian distance between two vectors is the length of the shortest line between the vectors. For example, the Euclidian distance, D_{E}, between two 2-dimensional vectors (a, b) and (x, y) may be represented as D_{E} = [(a - x)^2 + (b - y)^2)^(1/2). In another example, the Euclidian distance, D_{E}, between two 3-dimensional vectors (a, b, c) and (x, y, z) may be represented as D_{E} = [(a - x)^2 + (b - y)^2 + (c - z)^2]^(1/2). A Manhattan distance between two vectors is a sum of absolute differences between corresponding components of the vectors. For example, the Manhattan distance, D_{M}, between two 2-dimensional vectors (a, b) and (x, y) may be represented as D_{M} = Abs(a - x) + Abs(b - y). In another example, the Manhattan distance, D_{M}, between two 3-dimensional vectors (a, b, c) and (x, y, z) may be represented as D_{M} = Abs(a - x) + Abs(b - y) + Abs(c - z). A Cosine distance between two vectors is equal to a dot product of the vectors divided by a product of the magnitudes of the vectors. Accordingly, the Cosine distance, D_{C}, between vectors X and Y may be represented as D_{C} = (X · Y) / (∥X∥ * ∥Y∥).

In another aspect of this embodiment, the profile of the threat actor indicates a plurality of behaviors that the threat actor is known to use. Examples of a behavior include but are not limited to using a proxy (e.g., a residential Internet Protocol (IP) address), exploiting buffer overflow, deploying particular malware, and downloading personal information. For example, the plurality of behaviors may include tactic(s), technique(s), and/or procedure(s) associated with the threat actor. In accordance with this aspect, triggering the AI model to determine whether the threat actor performs the malicious activity with regard to the entity at step 206 includes causing the AI model to make the determination by take into consideration an extent to which the potentially anomalous event corresponds to the plurality of behaviors. For example, the extent being less than or equal to an extent threshold weighs in favor of a determination that the threat actor performs the malicious activity, and the extent being greater than the extent threshold weighs in favor of a determination that the threat actor does not perform the malicious activity.

The extent to which the potentially anomalous event corresponds to the plurality of behaviors may be determined in any of a variety of ways. In a first example, the AI model is triggered to determine a plurality of distances between a first embedding of the potentially anomalous event and a plurality of respective embeddings of the plurality of respective behaviors. It will be recognized that each of the plurality of distances may be any suitable type of distance, including but not limited to a Euclidian distance, a Manhattan distance, or a Cosine distance. In accordance with this example, the extent to which the potentially anomalous event corresponds to the plurality of behaviors is indicated by the plurality of distances. For instance, the plurality of distances being relatively shorter indicates that the potentially anomalous event corresponds to the plurality of behaviors to a relatively greater extent. The plurality of distances being relatively longer indicates that the potentially anomalous event corresponds to the plurality of behaviors to a relatively lesser extent.

In a second example, the AI model is triggered to determine a distance between the first embedding of the potentially anomalous event and a second embedding, which is a combination (e.g., average or median) of the plurality of respective embeddings of the plurality of respective behaviors. In accordance with this example, the extent to which the potentially anomalous event corresponds to the plurality of behaviors is indicated by the distance between the first embedding and the second embedding. For instance, the distance being relatively shorter indicates that the potentially anomalous event corresponds to the plurality of behaviors to a relatively greater extent, whereas the distance being relatively longer indicates that the potentially anomalous event corresponds to the plurality of behaviors to a relatively lesser extent.

In an example implementation of this aspect, generating the profile of the threat actor at step 204 includes identifying the plurality of behaviors by analyzing embeddings that represent logs associated with the entity. The plurality of behaviors are identified as a result of events, which are indicated by the embeddings, occurring more than a threshold number of times during a period of time. In an aspect, the plurality of behaviors are identified by performing a statistical analysis on the embeddings that represent the logs associated with the entity. In accordance with this aspect, the statistical analysis includes making a determination that the events indicated by the embeddings occur more than the threshold number of times during the period of time. In an example of this aspect, the plurality of behaviors are identified using a frequency analysis technique. A frequency analysis technique is a technique that determines a frequency with which a data point occurs in a dataset.

In another example implementation of this aspect, the AI prompt further comprises a plurality of thresholds regarding the plurality of behaviors. In accordance with this implementation, step 206 includes triggering the AI model to compare the description of the potentially anomalous event and the plurality of thresholds and to determine whether the threat actor performs the malicious activity with regard to the entity by taking into consideration whether (e.g., an extent to which) the potentially anomalous event satisfies the plurality of thresholds. For instance, a determination may be made whether the potentially anomalous event satisfies the plurality of thresholds by calculating a plurality of distances between a first embedding of the description of the potentially anomalous event and a plurality of second embeddings of the plurality of respective behaviors and determining whether the plurality of distances are greater than or equal to the plurality of respective thresholds. A determination whether the threat actor performs the malicious activity with regard to the entity may be based on a number (e.g., proportion) of the plurality of distances that are greater than or equal to the plurality of respective thresholds, an extent to which any one or more distances in the plurality of distances exceeds the respective threshold, and so on.

In an example multi-threat actor embodiment, generating the profile of the threat actor at step 204 includes generating a plurality of profiles of a plurality of threat actors using information that describes a plurality of behaviors of the plurality of threat actors. In an aspect, the plurality of profiles are stored in a threat actor database. For instance, each row of the database may correspond to a respective profile (and therefore a respective threat actor), and each column may correspond to a respective attribute. The plurality of threat actors include the threat actor. In accordance with the multi-threat actor embodiment, triggering the AI model to determine whether the threat actor performs the malicious activity with regard to the entity at step 206 includes triggering the AI model to rank the plurality of profiles by providing the AI prompt as the inputs to the AI model. Triggering the AI model to rank the plurality of profiles includes triggering the AI model to assign a plurality of ranks to the plurality of profiles based at least on a plurality of extents to which the plurality of profiles correspond to the potentially anomalous event. In an aspect, the extent to which each profile corresponds to the potentially anomalous event is based on (e.g., based at least on) a similarity between the respective profile and the potentially anomalous event. In another aspect, the extent to which each profile corresponds to the potentially anomalous event is based on a distance between an embedding associated with the respective profile and an embedding of information (e.g., data) that indicates the potentially anomalous event. The AI prompt includes the plurality of profiles and the description of the potentially anomalous event. The AI prompt further requests that the plurality of profiles be ranked with regard to the potentially anomalous event.

In an aspect of the multi-threat actor embodiment, the AI prompt requests whether any one or more of N threat actors, which have ranks that are no less than (e.g., that are higher than) ranks of the other threat actors in the plurality of threat actors, perform the malicious activity. The N threat actors include the threat actor. N is a positive integer greater than one. For instance, N may be 2, 3, 5, or 10. In an example, N is greater than or equal to two. In another example, N is greater than or equal to three. In yet another example, N is greater than or equal to five. In still another example, N is greater than or equal to ten. The N threat actors may be referred to as "the N top-ranked threat actors."

In another aspect of the multi-threat actor embodiment, the AI prompt that is used to trigger the AI model to determine whether the threat actor performs the malicious activity with regard to the entity and the AI prompt that is used to trigger the AI model to rank the plurality of profiles may be different. For example, the AI model may rank the plurality of profiles in response to receipt of a first AI prompt, which requests that the plurality of profiles be ranked with regard to the potentially anomalous event. In accordance with this example, the first AI prompt includes the plurality of profiles and the description of the potentially anomalous event. In further accordance with this example, the AI model may determine whether the threat actor performs the malicious activity with regard to the entity in response to receipt of a second AI prompt, which requests the determination whether the threat actor performs the malicious activity with regard to the entity. In further accordance with this example, and second AI prompt includes at least the profile of the threat actor and the description of the potentially anomalous event. For instance, the second AI prompt may include N profiles of the N threat actors that are discussed above in the immediately preceding paragraph.

In some example embodiments, one or more steps 202, 204, and/or 206 of flowchart 200 may not be performed. Moreover, steps in addition to or in lieu of steps 202, 204, and/or 206 may be performed. For instance, in an example embodiment, step 206 includes triggering the AI model to determine that the threat actor performs the malicious activity with regard to the entity. In an aspect of this embodiment, the method of flowchart 200 further includes, as a result of the AI model determining that the threat actor performs the malicious activity with regard to the entity, performing (e.g., triggering performance of) a security action with regard to the entity. In an example implementation, as a result of the AI model 414 determining that the threat actor performs the malicious activity with regard to the entity, the security action logic 416 performs a security action 454 with regard to the entity. For instance, the security action logic 416 may perform the security action 454 in response to receipt of a response 446 from the AI model 414 indicating that the threat actor performs the malicious activity with regard to the entity. Performance of the security action may include blocking access of a user (e.g., the threat actor) to the entity, changing permissions (e.g., read write, execute, full control) with regard to a user and/or the entity, providing an alert to a user (e.g., an IT professional or an end user) regarding the entity (e.g., indicating that the threat actor performs the malicious activity with regard to the entity), and so on.

In another aspect of this embodiment, the method of flowchart 200 further includes, as a result of the AI model determining that the threat actor performs the malicious activity with regard to the entity, triggering execution of a remedial operation with regard to the potentially anomalous event. In an example implementation, as a result of the AI model 414 determining that the threat actor performs the malicious activity with regard to the entity, the security action logic 416 triggers execution of the remedial operation with regard to the potentially anomalous event. For example, the security action logic 416 may perform the security action 454, which includes triggering the execution of the remedial operation with regard to the potentially anomalous event. The security action logic 416 may trigger the execution of the remedial operation with regard to the potentially anomalous event in response to receipt of the response 446 from the AI model 414 indicating that the threat actor performs the malicious activity with regard to the entity. The execution of the remedial operation may include blocking access of the threat actor to a resource (e.g., the entity, a computing system, or a network), changing permissions (e.g., read write, execute, full control) of the threat actor, providing an alert to a user (e.g., an IT professional or an end user) regarding the potentially anomalous event (e.g., indicating that the threat actor performs the malicious activity with regard to the entity), and so on.

In another example embodiment, step 206 includes triggering the AI model to determine that the threat actor performs the malicious activity with regard to the entity as a result of a maliciousness criterion being satisfied. In an aspect, the malicious criterion requires that the AI model determine that the threat actor performs the malicious activity with regard to the entity. In another aspect, the malicious criterion further requires that a risk associated with the threat actor performing the malicious activity with regard to the entity is greater than or equal to a risk threshold. For example, the risk threshold may correspond to a threshold number of users who are negatively impacted or potentially negatively impacted by the threat actor performing the malicious activity with regard to the entity. In accordance with this example, a number of users who are negatively impacted or potentially negatively impacted by the threat actor performing the malicious activity with regard to the entity being greater than or equal to the threshold number corresponds to the risk being greater than or equal to the risk threshold. In accordance with this embodiment, the method of flowchart 200 further includes, as a result of the maliciousness criterion being satisfied, triggering execution of a computer-executable instruction to block access of the threat actor to the entity. In an example implementation, as a result of the maliciousness criterion being satisfied, the security action logic 416 triggers execution of a computer-executable instruction to block access of the threat actor to the entity. For instance, the security action logic 416 may trigger the execution of the computer-executable instruction by performing the security action 454.

In an example log embodiment, the AI prompt further includes logs that are associated with the entity. In an aspect, the logs memorialize events that occur with regard to the entity during a specified period of time. In another aspect, the AI prompt may specify that particular event(s) in the logs are similar to the potentially anomalous event. In accordance with this aspect, an embedding model may be used to compare embeddings of the logs and an embedding of the potentially anomalous event to identify the particular event(s) in the logs that are similar to the potentially anomalous event. In accordance with this embodiment, step 206 includes triggering the AI model to compare the profile of the threat actor, the description of the potentially anomalous event, and the logs to determine whether the threat actor performs the malicious activity with regard to the entity. For instance, step 206 may include triggering the AI model to determine a number of instances of a specified keyword in the logs and to take the number of instances of the specified keyword into consideration to determine whether the threat actor performs the malicious activity with regard to the entity.

In an aspect of the log embodiment, the method of flowchart 200 further includes selecting the logs from a plurality of logs, which are associated with the entity, as a result of embeddings, which represent the logs, satisfying a representation criterion. In an aspect, the logs are selected from the plurality of logs in response to a triggering event related to the entity. The triggering event may be manually initiated or automatically initiated. The triggering event may be initiated by a user (e.g., a human) or by a computing system. It will be recognized that the representation criterion may include one or more criteria. In an aspect, the representation criterion requires that the identified logs pertain to security of the entity.

In an example implementation, the sampling logic 422 selects logs 436 from the plurality of logs 448, which are associated with the entity, as a result of embeddings, which represent the logs 436, satisfying the representation criterion. In an aspect, the sampling logic 422 generates a plurality of embeddings to represent the plurality of logs 448. The plurality of embeddings may serve as generic representations of the plurality of logs without requiring explicit feature engineering. For instance, each embedding may represent a respective word or combination of words in a corresponding log. For example, each embedding may represent a log line (e.g., a row in a table) in a log. In accordance with this example, a log that includes N log lines is represented by N embeddings, where N is a positive integer. In further accordance with this example, first embeddings may be created to represent respective portions (e.g., words) in a log line, and the first embeddings may be combined to provide a second embedding that represents an entirety of the log line. For instance, the first embeddings may be combined by calculating a mean or a median of the first embeddings to provide the second embedding. In another example, each embedding may represent an entirety of a respective log. In accordance with this aspect, the sampling logic 422 compares the plurality of embeddings to determine the logs 436 that are to be selected. In an aspect, the sampling logic 422 uses contrastive learning to select the logs 436 from the plurality of logs 448. Contrastive learning is a machine learning technique in which a model is trained to distinguish between similar and dissimilar data points. For instance, the model may be trained to maximize similarity of representations of similar data points and minimize similarity of representations of dissimilar data points. A data point is an element (e.g., an identifiable element) in a dataset. Examples of an element include but are not limited to a word, a combination of words, a log line, and a log.

Any suitable representation criterion may be used to select the logs from the plurality of logs. For example, the representation criterion may be defined by a clustering algorithm or a gradient algorithm. In an example clustering embodiment, selecting the logs from the plurality of logs includes clustering subsets of the plurality of logs into respective clusters by analyzing a plurality of embeddings that represent the plurality of logs using a clustering algorithm. The clustering algorithm may be density-based, distribution-based, centroid-based, or hierarchical-based. A density-based clustering algorithm clusters data points (e.g., logs), which are included in an area having a relatively high concentration of data points that is surrounded by area(s) having a relatively low concentration of data points, into a cluster. A distribution-based clustering algorithm clusters data points into clusters based on a distance of each data point to the center of each of multiple clusters, such that the data point is included in the cluster having a center that is closer to the data point than the center of each other cluster. A centroid-based clustering algorithm clusters data points into clusters based on a squared distance of each data point from each of multiple centroids in the data, such that the data point is included in the cluster corresponding to the centroid with the shortest squared distance to the data point. A hierarchical-based clustering algorithm clusters data points based on which of multiple hierarchical levels of a hierarchy includes the data points. For example, data points corresponding to a first hierarchical level are clustered into a first cluster; data points corresponding to a second hierarchical level are clustered into a second cluster, and so on. The subsets of the plurality of logs are clustered into the respective clusters as a result of the subsets corresponding to respective attributes. For example, a first subset of the plurality of logs may be clustered into a first cluster as a result of the logs in the first subset sharing a first attribute. A second subset of the plurality of logs may be clustered into a second cluster as a result of the logs in the second subset sharing a second attribute, and so on. In accordance with this embodiment, selecting the logs from the plurality of logs further includes selecting the logs from the respective clusters. For example, a designated (e.g., fixed) number of logs (e.g., 1, 2, 3, or 10) may be selected from each cluster.

In an aspect of the clustering embodiment, the clustering algorithm is a K-means clustering algorithm. The K-means clustering algorithm is an unsupervised learning centroid-based clustering algorithm. In an aspect, the K-means clustering algorithm attempts to minimize the variance of data points within each cluster.

In another aspect of the clustering embodiment, the clustering algorithm is a density-based spatial clustering of applications with noise (DBSCAN) clustering algorithm. As indicated by its name, the DBSCAN clustering algorithm is a density-based clustering algorithm. The DBSCAN clustering algorithm defines arbitrarily shaped clusters based on density of data points in regions that are separated by areas of low-density.

Other examples of a clustering algorithm include but are not limited to a Gaussian mixture clustering algorithm, a balance iterative reducing and clustering using hierarchies (BIRCH) clustering algorithm, an affinity propagation clustering algorithm, a mean-shifting clustering algorithm, an ordering points to identify the clustering structure (OPTICS) clustering algorithm, and an agglomerative hierarchy clustering algorithm.

In some example embodiments, the logs are selected from the plurality of logs using a greedy distance maximization technique. In accordance with the greedy distance maximization technique, a first log embedding is selected initially. For example, the first log embedding may be selected based on a reference point in embedding space. In an aspect, the reference point is a center (e.g., a mean or a median) of all embeddings. For instance, the first embedding may be selected because it is closest to the reference point. Next, a second embedding is selected based on the embedding being farthest from the first embedding in the embedding space. Next, for each remaining embedding, a minimum distance to each embedding that has been selected so far is determined, and a third embedding having the largest minimum distance to any selected embedding is selected. This means, for each remaining embedding, determining the distance to each selected embedding, selecting the minimum of these distances (the minimum distance), and identifying the largest of these minimum distances (the maximum minimum distance). This "max-min" operation ensures diversity because it ensures that subsequent selections are relatively distant from all embeddings that have been selected so far. This process repeats until a predetermined number, N, of embeddings have been selected.

In another aspect of the log embodiment, the method of flowchart 200 further includes selecting the logs from a plurality of logs, which are associated with the entity, as a result of the logs being associated with the potentially anomalous event. For example, a first embedding associated with the potentially anomalous event may be compared to second embeddings associated with the plurality of logs to determine which of the plurality of logs are associated with the potentially anomalous event. In accordance with this example, distances between the first embedding and the respective second embeddings may be calculated. In an example implementation, logs having second embeddings that are within a threshold distance from the first embedding are selected from the plurality of logs. In another example implementation, a designated number (e.g., 5, 20, or 100) of logs whose second embeddings are closest to the first embedding are selected from the plurality of logs.

In an example implementation, the sampling logic 422 selects logs 436 from the plurality of logs 448, which are associated with the entity, as a result of the logs 436 being associated with the potentially anomalous event. In an aspect, the sampling logic 422 compares an embedding of a log that represents the potentially anomalous event and embeddings that represent the plurality of logs 448 to determine the logs 436, which are associated with the potentially anomalous event. For instance, logs having embeddings that are within a threshold distance from the embedding that represents the potentially anomalous event may be selected from the plurality of logs 448.

In yet another aspect of the log embodiment, the method of flowchart 200 further includes determining that the logs comprise an identified event that corresponds to the potentially anomalous event by comparing first embeddings that represents the logs and a second embedding that represents the potentially anomalous event. In an example implementation, the prompt generation logic 424 determines that the logs 436 comprise the identified event that corresponds to the potentially anomalous event by comparing the first embeddings that represents the logs 436 and the second embedding that represents the potentially anomalous event. In accordance with this embodiment, the prompt further includes a statement that the identified event in the logs corresponds to the potentially anomalous event. For instance, the AI prompt 438 may further include the statement that the identified event in the logs 436 corresponds to the potentially anomalous event. In further accordance with this embodiment, step 206 includes triggering the AI model to compare the profile of the threat actor, the description of the potentially anomalous event, the logs, and the statement that the identified event in the logs corresponds to the potentially anomalous event to determine whether the threat actor performs the malicious activity with regard to the entity. For instance, the prompt generation logic 424 may trigger the AI model 414 to compare the profile 442 of the threat actor, the event description 444, the logs 436, and the statement that the identified event in the logs 436 corresponds to the potentially anomalous event to determine whether the threat actor performs the malicious activity with regard to the entity.

In another example embodiment, step 206 includes triggering the AI model to generate a report, which indicates whether the threat actor performs the malicious activity with regard to the entity. For instance, the prompt generation logic 424 may trigger the AI model 414 to generate a report 450 that indicates whether the threat actor performs the malicious activity with regard to the entity. In accordance with this embodiment, the method of flowchart 200 further includes, as a result of the AI model generating the report, receiving an assessment of the report from a user. For instance, the user may be an IT professional (e.g., security analyst or a system administrator). The assessment indicates whether the threat actor performs the malicious activity with regard to the entity from a perspective of the user. In an example implementation, as a result of the AI model 414 generating the report 450, the training logic 420 receives a report assessment 434, which assesses the report 450, from the user. The report assessment 434 indicates whether the threat actor performs the malicious activity with regard to the entity from the perspective of the user. In further accordance with this embodiment, the method of flowchart 200 further includes training the AI model using the assessment. In an example implementation, the training logic 420 trains the AI model 414 using the report assessment 434. For instance, the training logic 420 may generate training instructions 452 based on the report assessment 434. The training instruction 452 are configured to train the AI model 414.

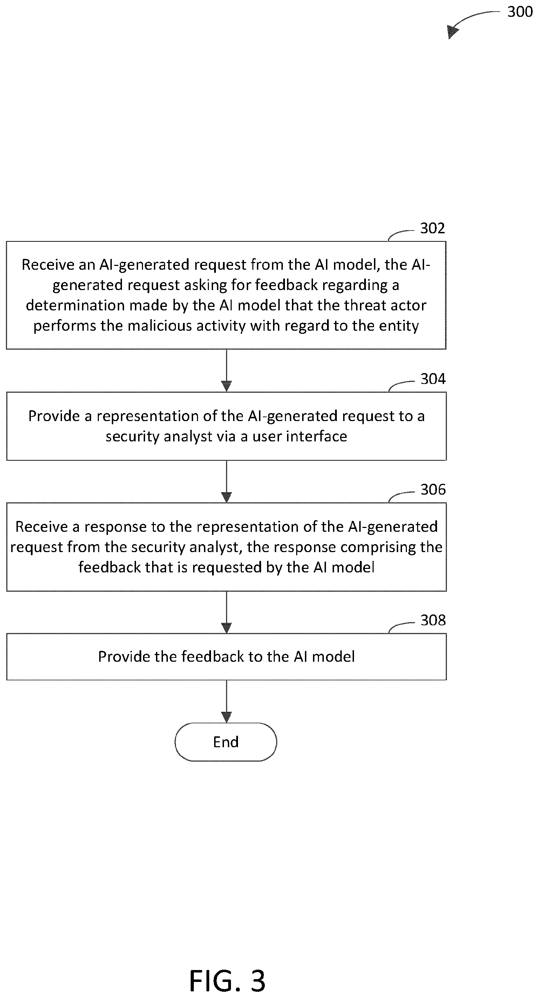

In yet another example embodiment, the method of flowchart 200 further includes one or more of the steps shown in flowchart 300 of FIG. 3. As shown in FIG. 3, the method of flowchart 300 begins at step 302. In step 302, an AI-generated request is received from the AI model. The AI-generated request asks for feedback regarding a determination made by the AI model that the threat actor performs the malicious activity with regard to the entity. In an aspect, the AI-generated request is received from the AI model in response to the AI prompt being provided as the input to the AI model. In an example implementation, the analyst interaction logic 418 receives an AI-generated request 430 from the AI model 414 (e.g., as a result of the AI prompt 438 being provided as the input to the AI model 414). The AI-generated request 430 asks for feedback 432 regarding a determination made by the AI model 414 that the threat actor performs the malicious activity with regard to the entity.

At step 304, a representation of the AI-generated request is provided to a security analyst via a user interface. In an aspect, the representation of the AI-generated request is a recharacterization (e.g., a summary or a paraphrase) of the AI-generated request. In another aspect, the representation of the AI-generated request is the AI-generated request (e.g., verbatim). In an aspect, the representation of the AI-generated request is provided in response to receipt of the AI-generated request from the AI model. In an example implementation, the analyst interaction logic 418 provides a request representation 456 to the security analyst via the user interface. The request representation 456 is a representation of the AI-generated request 430. In accordance with this implementation, request representation 456 solicits the feedback 432 regarding the determination made by the AI model 414 that the threat actor performs the malicious activity with regard to the entity.

At step 306, a response to the representation of the AI-generated request is received from the security analyst. The response includes the feedback that is requested by the AI model. In an example implementation, the analyst interaction logic 418 receives an analyst response 458 from the security analyst. The analyst response 458 is responsive to the request representation 456. The analyst response 458 includes the feedback 432 that is requested in the AI-generated request 430 received from the AI model 414 (and that is solicited in the request representation 456).

At step 308, the feedback is provided to the AI model. In an aspect, the feedback is provided to the AI model in response to receipt of the response from the security analyst. In another aspect, providing the feedback to the AI model includes training the AI model using the feedback. In an example implementation, the analyst interaction logic 418 provides the feedback 432 to the AI model 414.

In an example embodiment, the prompt generation logic 424 causes (e.g., triggers) the AI model 414 to analyze (e.g., develop and/or refine an understanding of) the AI prompt 438 (including the profile 442 and the event description 444), relationships between any of the foregoing, and confidences in those relationships. For example, the prompt generation logic 424 may cause the AI model 414 to compare attributes of the AI prompt 438 (including the profile 442 and the event description 444), contextual information (which may include sample AI prompt(s), sample profile(s), and sample event description(s)) using artificial intelligence to determine whether the entity exhibits malicious behavior.

In some example embodiments, the AI model 414 includes a neural network that uses the artificial intelligence to determine (e.g., predict) relationships between the AI prompt 438 (including the profile 442 and the event description 444), the contextual information, and confidences in the relationships. The neural network uses those relationships to determine whether the threat actor performs the malicious activity with regard to the entity. For example, attributes of the AI prompt 438 and potentially example AI prompt(s), example profile(s), and example event description(s) may be compared to determine similarities and differences between those attributes. In accordance with this example, the neural network may use those similarities and differences to determine whether the threat actor performs the malicious activity with regard to the entity.

Examples of a neural network include but are not limited to a feed forward neural network and a transformer-based neural network. A feed forward neural network is an artificial neural network for which connections between units in the neural network do not form a cycle. The feed forward neural network allows data to flow forward (e.g., from the input nodes toward to the output nodes), but the feed forward neural network does not allow data to flow backward (e.g., from the output nodes toward to the input nodes). In an example embodiment, the prompt generation logic 424 employs a feed forward neural network to train the AI model 414, which is used to determine AI-based confidences. Such AI-based confidences may be used to determine likelihoods that events will occur.

A transformer-based neural network is a neural network that incorporates a transformer. A transformer is a deep learning model that utilizes attention to differentially weight the significance of each portion of sequential input data, such as natural language. Attention is a technique that mimics cognitive attention. Cognitive attention is a behavioral and cognitive process of selectively concentrating on a discrete aspect of information while ignoring other perceivable aspects of the information. Accordingly, the transformer uses the attention to enhance some portions of the input data while diminishing other portions. The transformer determines which portions of the input data to enhance and which portions of the input data to diminish based on the context of each portion. For instance, the transformer may be trained to identify the context of each portion using any suitable technique, such as gradient descent.

In an example embodiment, the transformer-based neural network generates a malicious activity model (e.g., to determine whether threat actors perform malicious activities with regard to entities) by utilizing information, such as AI prompts (e.g., the AI prompt 438, including the profile 442 and the event description 444), contextual information, relationships between any of the foregoing, and AI-based confidences that are derived therefrom.

In example embodiments, the AI prompt 438 includes training logic, and the AI model 414 includes inference logic. The training logic is configured to train an AI algorithm that the inference logic uses to determine (e.g., infer) the AI-based confidences. For instance, the training logic may provide sample AI prompts (e.g., including sample profile(s) and sample event description(s)) and sample contextual information as inputs to the AI algorithm to train the AI algorithm. The sample data may be labeled. The AI algorithm may be configured to derive relationships between the features (e.g., the AI prompt 438, including the profile 442 and the event description 444) and the resulting AI-based confidences. The inference logic is configured to utilize the AI algorithm, which is trained by the training logic, to determine the AI-based confidence when the features are provided as inputs to the algorithm.

In an example embodiment, the AI model 414 includes (e.g., is) a generative language model. A generative language model is an AI model that is capable of generating original text output based on sample data. Examples of a generative language model include but are not limited to a generative pre-trained transformer 3 (a.k.a., GPT-3^{®}) model and a generative pre-trained transformer 4 (a.k.a. GPT-4^{®}) model, developed and distributed by OpenAI, Inc.; a large language model Meta AI (a.k.a. LLaMA^{®}) model, developed and distributed by Meta Platforms Inc.; a language model for dialogue applications (a.k.a., LaMDA^{®}) model and a Gemini^{®} model, developed and distributed by Google LLC; and a BigScience large open-science open-access multilingual language model (a.k.a. BLOOM) model, developed and distributed by the BigScience collaborative initiative. A generative language model may use any suitable relevancy determination and/or ranking technique. For instance, the generative language model may use a BM25 (a.k.a. Okapi BM25) ranking function to perform its analysis (e.g., based on keywords).

In another example embodiment, the AI model 414 includes a large language model (LLM). A large language model is an artificial neural network that is capable of performing natural language processing (NLP) tasks. For instance, the large language model may use a transformer model to perform the NLP tasks. In an aspect, the large language model is trained (e.g., pre-trained) using self-supervised learning and semisupervised learning. Examples of a large language model include but are not limited to the GPT-3^{®} and GPT-4^{®} models, developed and distributed by OpenAI, Inc.; the LLaMA^{®} model, developed and distributed by Meta Platforms Inc.; and a pathways language model (a.k.a., PaLM^{®}) model and the Gemini^{®} model, developed and distributed by Google LLC.

In yet another example embodiment, the AI model 414 includes an embedding model. An embedding model is an AI model that uses deep learning to convert data into vectors, which represent attributes of the data, and that compares at least a subset of the vectors to determine an extent to which the vectors that are included in the subset are similar. For instance, each vector may represent a semantic meaning of a log or a portion thereof.

In still another example embodiment, the AI model 414 includes multiple types of AI models. Weights may be applied to the responses generated by the respective types of AI models. For example, the AI model 414 may include a generative AI model and an embedding model. In accordance with this example, a first weight may be applied to a first response generated by the generative AI model to provide a first weighted response, and a second weight that is different from the first weight may be applied to a second response of the embedding model to provide a second weighted response. The AI model 414 may combine (e.g., sum) the first weighted response and the second weighted response to generate a response of the AI model 414.

In an embedding model embodiment, generating the profile of the threat actor at step 204 is performed using an embedding model (e.g., embedding model 412). In an aspect of this embodiment, the embedding model is an encoder-only model. One example of an encoder-only model is the bidirectional encoder representations from transformers (BERT^{™}) model, which is developed and distributed by Google LLC. In another aspect of this embodiment, the embedding model is a decoder-only model. In yet another aspect of this embodiment, the embedding model is an encoder-decoder model. One example of an encoder-decoder model is the FLAN-T5^{™} model, which is developed and distributed by Google LLC.

It will be recognized that the computing system 400 may not include one or more of the threat actor profile-based maliciousness detection logic 408, the store 410, the embedding model 412, the AI model 414, the security action logic 416, the analyst interaction logic 418, the training logic 420, the sampling logic 422, the prompt generation logic 424, and/or the report generation logic 426. Furthermore, the computing system 400 may include components in addition to or in lieu of the threat actor profile-based maliciousness detection logic 408, the store 410, the embedding model 412, the AI model 414, the security action logic 416, the analyst interaction logic 418, the training logic 420, the sampling logic 422, the prompt generation logic 424, and/or the report generation logic 426.

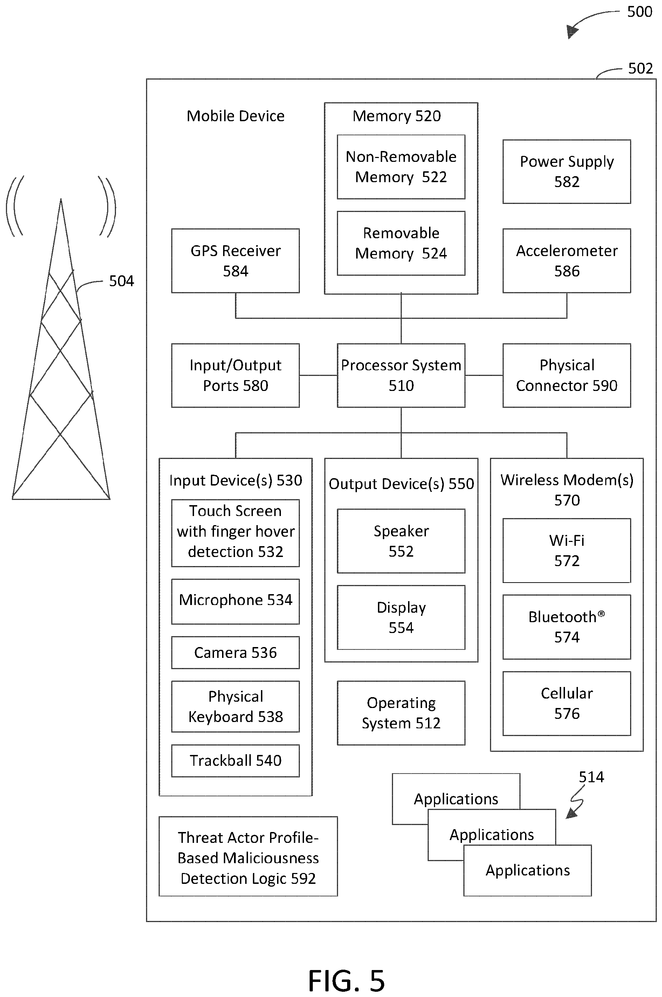

FIG. 5 is a system diagram of an example mobile device 500 including a variety of optional hardware and software components, shown generally as 502. Any components 502 in the mobile device may communicate with any other component, though not all connections are shown, for ease of illustration. The mobile device 500 may be any of a variety of computing devices (e.g., cell phone, smartphone, handheld computer, Personal Digital Assistant (PDA), etc.) and may allow wireless two-way communications with one or more mobile communications networks 504, such as a cellular or satellite network, or with a local area or wide area network.

The mobile device 500 includes a processor system 510 (e.g., signal processor, microprocessor, ASIC, or other control and processing logic circuitry) for performing such tasks as signal coding, data processing, input/output processing, power control, and/or other functions. An operating system 512 may control the allocation and usage of the components 502 and support for one or more applications 514 (a.k.a. application programs). The applications 514 may include common mobile computing applications (e.g., email applications, calendars, contact managers, web browsers, messaging applications) and any other computing applications (e.g., word processing applications, mapping applications, media player applications).

The mobile device 500 includes threat actor profile-based maliciousness detection logic 592, which is operable in a manner similar to the threat actor profile-based maliciousness detection logic 108 described above with reference to FIG. 1 and/or the threat actor profile-based maliciousness detection logic 408 described above with reference to FIG. 4.

The mobile device 500 includes memory 520. The memory 520 may include non-removable memory 522 and/or removable memory 524. The non-removable memory 522 may include random access memory (RAM), read-only memory (ROM), flash memory, a hard disk, or other well-known memory storage technologies. The removable memory 524 may include flash memory or a Subscriber Identity Module (SIM) card, which is well known in Global System for Mobile Communications (GSM) systems, or other well-known memory storage technologies, such as "smart cards." The memory 520 may store data and/or code for running the operating system 512 and the applications 514. Example data may include web pages, text, images, sound files, video data, or other data sets to be sent to and/or received from one or more network servers or other devices via one or more wired or wireless networks. Memory 520 may store a subscriber identifier, such as an International Mobile Subscriber Identity (IMSI), and an equipment identifier, such as an International Mobile Equipment Identifier (IMEI). Such identifiers may be transmitted to a network server to identify users and equipment.

The mobile device 500 may support one or more input devices 530, such as a touch screen 532, microphone 534, camera 536, physical keyboard 538 and/or trackball 540 and one or more output devices 550, such as a speaker 552 and a display 554. Touch screens, such as the touch screen 532, may detect input in different ways. For example, capacitive touch screens detect touch input when an object (e.g., a fingertip) distorts or interrupts an electrical current running across the surface. As another example, touch screens may use optical sensors to detect touch input when beams from the optical sensors are interrupted. Physical contact with the surface of the screen is not necessary for input to be detected by some touch screens. For example, the touch screen 532 may support a finger hover detection using capacitive sensing, as is well understood. Other detection techniques may be used, including camera-based detection and ultrasonicbased detection. To implement a finger hover, a user's finger is typically within a predetermined spaced distance above the touch screen, such as between 0.1 to 0.25 inches, or between 0.25 inches and 0.5 inches, or between 0.5 inches and 0.75 inches, or between 0.75 inches and 1 inch, or between 1 inch and 1.5 inches, etc.

Other possible output devices (not shown) may include piezoelectric or other haptic output devices. Some devices may serve more than one input/output function. For example, touch screen 532 and display 554 may be combined in a single input/output device. The input devices 530 may include a Natural User Interface (NUI). An NUI is any interface technology that enables a user to interact with a device in a "natural" manner, free from artificial constraints imposed by input devices such as mice, keyboards, remote controls, and the like. Examples of NUI methods include those relying on speech recognition, touch and stylus recognition, gesture recognition both on screen and adjacent to the screen, air gestures, head and eye tracking, voice and speech, vision, touch, gestures, and machine intelligence. Other examples of a NUI include motion gesture detection using accelerometers/gyroscopes, facial recognition, 3D displays, head, eye, and gaze tracking, immersive augmented reality and virtual reality systems, all of which provide a more natural interface, as well as technologies for sensing brain activity using electric field sensing electrodes (EEG and related methods). Thus, in one specific example, the operating system 512 or applications 514 may include speech-recognition software as part of a voice control interface that allows a user to operate the mobile device 500 via voice commands. Furthermore, the mobile device 500 may include input devices and software that allows for user interaction via a user's spatial gestures, such as detecting and interpreting gestures to provide input to a gaming application.

Wireless modem(s) 570 may be coupled to antenna(s) (not shown) and may support two-way communications between the processor system 510 and external devices, as is well understood in the art. The modem(s) 570 are shown generically and may include a cellular modem 576 for communicating with the mobile communication network 504 and/or other radio-based modems (e.g., Bluetooth^{®} 574 and/or Wi-Fi 572). At least one of the wireless modem(s) 570 is typically configured for communication with one or more cellular networks, such as a GSM network for data and voice communications within a single cellular network, between cellular networks, or between the mobile device and a public switched telephone network (PSTN).

The mobile device 500 may further include at least one input/output port 580, a power supply 582, a satellite navigation system receiver 584, such as a Global Positioning System (GPS) receiver, an accelerometer 586, and/or a physical connector 590, which may be a universal serial bus (USB) port, IEEE 1394 (FireWire) port, and/or RS-232 port. The illustrated components 502 are not required or all-inclusive, as any components may be deleted and other components may be added as would be recognized by one skilled in the art.

Although the operations of some of the disclosed methods are described in a particular, sequential order for convenient presentation, it should be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods may be used in conjunction with other methods.

Any one or more of the threat actor profile-based maliciousness detection logic 108, the threat actor profile-based maliciousness detection logic 408, the embedding model 412, the AI model 414, the security action logic 416, the analyst interaction logic 418, the training logic 420, the sampling logic 422, the prompt generation logic 424, the report generation logic 426, flowchart 200, and/or flowchart 300 may be implemented in hardware, software, firmware, or any combination thereof.

For example, any one or more of the threat actor profile-based maliciousness detection logic 108, the threat actor profile-based maliciousness detection logic 408, the embedding model 412, the AI model 414, the security action logic 416, the analyst interaction logic 418, the training logic 420, the sampling logic 422, the prompt generation logic 424, the report generation logic 426, flowchart 200, and/or flowchart 300 may be implemented, at least in part, as computer program code configured to be executed in one or more processors.

In another example, any one or more of the threat actor profile-based maliciousness detection logic 108, the threat actor profile-based maliciousness detection logic 408, the embedding model 412, the AI model 414, the security action logic 416, the analyst interaction logic 418, the training logic 420, the sampling logic 422, the prompt generation logic 424, the report generation logic 426, flowchart 200, and/or flowchart 300 may be implemented, at least in part, as hardware logic/electrical circuitry. Such hardware logic/electrical circuitry may include one or more hardware logic components. Examples of a hardware logic component include but are not limited to a field-programmable gate array (FPGA), an application-specific integrated circuit (ASIC), an application-specific standard product (ASSP), a system-on-a-chip system (SoC), a complex programmable logic device (CPLD), etc. For instance, a SoC may include an integrated circuit chip that includes one or more of a processor (e.g., a microcontroller, microprocessor, digital signal processor (DSP), etc.), memory, one or more communication interfaces, and/or further circuits and/or embedded firmware to perform its functions.

### II. Further Discussion of Some Example Embodiments

(A1) An example system (Figure 1, 102A-102M, 106A-106N; Figure 4, 400; Figure 5, 502; Figure 6, 00) comprises a processor system (Figure 5, 510; Figure 6, 602) and a memory (Figure 5, 520, 522, 524; Figure 6, 604, 608, 610) that stores computer-executable instructions. The computer-executable instructions are executable by the processor system to at least receive (Figure 2, 202) an alert (Figure 4, 428), which indicates that a potentially anomalous event has occurred with regard to an entity. The computer-executable instructions are executable by the processor system further to at least generate (Figure 2, 204) a profile (Figure 4, 442) of a threat actor using information that describes behavior of the threat actor. The profile indicates a plurality of behaviors that the threat actor is known to use. The computer-executable instructions are executable by the processor system further to at least trigger (Figure 2, 206) an artificial intelligence (AI) model (Figure 4, 414) to determine that the threat actor performs a malicious activity with regard to the entity by taking into consideration an extent to which the potentially anomalous event corresponds to the plurality of behaviors. The AI model is triggered by providing an AI prompt (Figure 4, 438) together with contextual information (Figure 4, 440) as inputs to the AI model. The AI prompt requests a determination whether the threat actor performs the malicious activity with regard to the entity. The contextual information comprises the profile of the threat actor and a description (Figure 4, 444) of the potentially anomalous event. The contextual information comprises context regarding the AI prompt. The computer-executable instructions are executable by the processor system further to at least, as a result of the AI model determining that the threat actor performs the malicious activity with regard to the entity, trigger execution of a remedial operation (Figure 4, 454) with regard to the potentially anomalous event.

(A2) In the example system of A1, wherein the profile indicates a plurality of behaviors that the threat actor is known to use; and wherein the computer-executable instructions are executable by the processor system to at least: trigger the AI model to determine whether the threat actor performs the malicious activity with regard to the entity by taking into consideration an extent to which the potentially anomalous event corresponds to the plurality of behaviors.

(A3) In the example system of any of A1-A2, wherein the computer-executable instructions are executable by the processor system to at least: identify the plurality of behaviors by analyzing embeddings that represent logs associated with the entity, wherein the plurality of behaviors are identified as a result of events, which are indicated by the embeddings, occurring more than a threshold number of times during a period of time.

(A4) In the example system of any of A1-A3, wherein the contextual information further comprises a plurality of thresholds regarding the plurality of behaviors; and wherein the computer-executable instructions are executable by the processor system to at least: trigger the AI model to compare the description of the potentially anomalous event and the plurality of thresholds and to determine whether the threat actor performs the malicious activity with regard to the entity by taking into consideration whether the potentially anomalous event satisfies the plurality of thresholds.

(A5) In the example system of any of A1-A4, wherein the AI prompt further comprises logs that are associated with the entity; and wherein the computer-executable instructions are executable by the processor system to at least: trigger the AI model to compare the profile of the threat actor, the description of the potentially anomalous event, and the logs to determine whether the threat actor performs the malicious activity with regard to the entity.

(A6) In the example system of any of A1-A5, wherein the computer-executable instructions are executable by the processor system further to at least: select the logs from a plurality of logs, which are associated with the entity, as a result of embeddings, which represent the logs, satisfying a representation criterion.

(A7) In the example system of any of A1-A6, wherein the computer-executable instructions are executable by the processor system further to at least: select the logs from a plurality of logs, which are associated with the entity, as a result of the logs being associated with the potentially anomalous event.

(A8) In the example system of any of A1-A7, wherein the computer-executable instructions are executable by the processor system to at least: determine that the logs comprise an identified event that corresponds to the potentially anomalous event by comparing first embeddings that represent the logs and a second embedding that represents the potentially anomalous event, wherein the AI prompt further comprises a statement that the identified event in the logs corresponds to the potentially anomalous event; and trigger the AI model to compare the profile of the threat actor, the description of the potentially anomalous event, the logs, and the statement that the identified event in the logs corresponds to the potentially anomalous event to determine whether the threat actor performs the malicious activity with regard to the entity.

(A9) In the example system of any of A1-A8, wherein the computer-executable instructions are executable by the processor system to at least: trigger the AI model to generate the profile by providing a second AI prompt as an input to the AI model; wherein the second AI prompt comprises at least one of the following: a historical log that indicates behavior of the threat actor, an intelligence report that indicates a method used by the threat actor to perform a malicious attack, or information regarding a historical attack associated with the threat actor; and wherein the second AI prompt requests generation of the profile using a specified structure.

(A10) In the example system of any of A1-A9, wherein the computer-executable instructions are executable by the processor system further to at least: in response to the AI prompt being provided together with the contextual information as the inputs to the AI model, receive an AI-generated request from the AI model, the AI-generated request asking for feedback regarding a determination made by the AI model that the threat actor performs the malicious activity with regard to the entity; in response to receipt of the AI-generated request from the AI model, provide a representation of the AI-generated request to a security analyst via a user interface; receive a response to the representation of the AI-generated request from the security analyst, the response comprising the feedback that is requested by the AI model; and in response to receipt of the response from the security analyst, provide the feedback to the AI model.

(A11) In the example system of any of A1-A10, wherein the computer-executable instructions are executable by the processor system to at least: trigger the AI model to generate a report, which indicates whether the threat actor performs the malicious activity with regard to the entity; as a result of the report being generated by the AI model, receive an assessment of the report from a user, the assessment indicating whether the threat actor performs the malicious activity with regard to the entity from a perspective of the user; and train the AI model using the assessment.

(A12) In the example system of any of A1-A11, wherein the computer-executable instructions are executable by the processor system to at least: generate a plurality of profiles of a plurality of threat actors using information that describes a second plurality of behaviors of the plurality of threat actors, the plurality of threat actors comprising the threat actor; and trigger the AI model to rank the plurality of profiles by assigning a plurality of ranks to the plurality of profiles based at least on a plurality of extents to which the plurality of profiles correspond to the potentially anomalous event by providing the AI prompt together with the contextual information as the inputs to the AI model, the AI prompt further requesting that the plurality of profiles be ranked with regard to the potentially anomalous event, the contextual information comprising the plurality of profiles and the description of the potentially anomalous event.

(A13) In the example system of any of A1-A12, wherein the computer-executable instructions are executable by the processor system to at least: reduce a likelihood that a determination of the AI model, which indicates that the threat actor performs the malicious activity with regard to the entity, is a false positive by providing the AI prompt together with the contextual information, which comprises the profile of the threat actor and the description of the potentially anomalous event, as the inputs to the AI model.

(B1) An example method is implemented by a computing system (Figure 1, 102A-102M, 106A-106N; Figure 4, 400; Figure 5, 502; Figure 6, 600). The method comprises receiving (Figure 2, 202) an alert, which indicates that a potentially anomalous event has occurred with regard to an entity. The method further comprises generating (Figure 2, 204) a profile (Figure 4, 442) of a threat actor using information that describes behavior of the threat actor. The method further comprises triggering (Figure 2, 206) an artificial intelligence (AI) model (Figure 4, 414) to determine whether the threat actor performs a malicious activity with regard to the entity by providing an AI prompt (Figure 4, 438), which comprises the profile of the threat actor and a description (Figure 4, 444) of the potentially anomalous event, as an input to the AI model. The AI prompt requests a determination whether the threat actor performs the malicious activity with regard to the entity.

(B2) In the example method of B1, wherein triggering the AI model to determine whether the threat actor performs the malicious activity with regard to the entity comprises: triggering the AI model to determine that the threat actor performs the malicious activity with regard to the entity as a result of a maliciousness criterion being satisfied; and wherein the method further comprises: as a result of the maliciousness criterion being satisfied, triggering execution of a computer-executable instruction to block access of the threat actor to the entity.

(B3) In the example method of any of B1-B2, wherein providing the AI prompt, which comprises the profile of the threat actor and the description of the potentially anomalous event, as the input to the AI model reduces a likelihood that a determination of the AI model, which indicates that the threat actor performs the malicious activity with regard to the entity, is a false positive.

(B4) In the example method of any of B1-B3, wherein triggering the AI model to determine whether the threat actor performs the malicious activity with regard to the entity comprises: triggering the AI model to determine that the threat actor performs the malicious activity with regard to the entity as a result of a similarity between the potentially anomalous event and the profile being greater than or equal to a similarity threshold.

(B5) In the example method of any of B1-B4, wherein the profile indicates a plurality of behaviors that the threat actor is known to use; and wherein triggering the AI model to determine whether the threat actor performs the malicious activity with regard to the entity comprises: triggering the AI model to determine whether the threat actor performs the malicious activity with regard to the entity by taking into consideration an extent to which the potentially anomalous event corresponds to the plurality of behaviors.

(B6) In the example method of any of B1-B5, wherein generating the profile of the threat actor comprises: identifying the plurality of behaviors by analyzing embeddings that represent logs associated with the entity, wherein the plurality of behaviors are identified as a result of events, which are indicated by the embeddings, occurring more than a threshold number of times during a period of time.

(B7) In the example method of any of B1-B6, wherein the AI prompt further comprises a plurality of thresholds regarding the plurality of behaviors; and wherein triggering the AI model to determine whether the threat actor performs the malicious activity with regard to the entity comprises: triggering the AI model to compare the description of the potentially anomalous event and the plurality of thresholds and to determine whether the threat actor performs the malicious activity with regard to the entity by taking into consideration an extent to which the potentially anomalous event satisfies the plurality of thresholds.

(B8) In the example method of any of B1-B7, wherein the AI prompt further comprises logs that are associated with the entity; and wherein triggering the AI model to determine whether the threat actor performs the malicious activity with regard to the entity comprises: triggering the AI model to compare the profile of the threat actor, the description of the potentially anomalous event, and the logs to determine whether the threat actor performs the malicious activity with regard to the entity.

(B9) In the example method of any of B1-B8, further comprising: selecting the logs from a plurality of logs, which are associated with the entity, as a result of embeddings, which represent the logs, satisfying a representation criterion.

(B10) In the example method of any of B1-B9, further comprising: selecting the logs from a plurality of logs, which are associated with the entity, as a result of the logs being associated with the potentially anomalous event.

(B11) In the example method of any of B1-B10, further comprising: determining that the logs comprise an identified event that corresponds to the potentially anomalous event by comparing first embeddings that represent the logs and a second embedding that represents the potentially anomalous event; wherein the AI prompt further comprises a statement that the identified event in the logs corresponds to the potentially anomalous event; and wherein triggering the AI model to determine whether the threat actor performs the malicious activity with regard to the entity comprises: triggering the AI model to compare the profile of the threat actor, the description of the potentially anomalous event, the logs, and the statement that the identified event in the logs corresponds to the potentially anomalous event to determine whether the threat actor performs the malicious activity with regard to the entity.

(B12) In the example method of any of B1-B11, wherein generating the profile comprises: triggering the AI model to generate the profile by providing a second AI prompt as an input to the AI model; wherein the second AI prompt comprises at least one of the following: a historical log that indicates behavior of the threat actor, an intelligence report that indicates a method used by the threat actor to perform a malicious attack, or information regarding a historical attack associated with the threat actor; and wherein the second AI prompt requests generation of the profile using a specified structure.

(B13) In the example method of any of B1-B12, further comprising: in response to providing the AI prompt as the input to the AI model, receiving an AI-generated request from the AI model, the AI-generated request asking for feedback regarding a determination made by the AI model that the threat actor performs the malicious activity with regard to the entity; in response to receiving the AI-generated request from the AI model, providing a representation of the AI-generated request to a security analyst via a user interface; receiving a response to the representation of the AI-generated request from the security analyst, the response comprising the feedback that is requested by the AI model; and in response to receiving the response from the security analyst, providing the feedback to the AI model.

(B14) In the example method of any of B1-B13, wherein triggering the AI model to determine whether the threat actor performs the malicious activity with regard to the entity comprises: triggering the AI model to generate a report, which indicates whether the threat actor performs the malicious activity with regard to the entity; and wherein the method further comprises: as a result of the AI model generating the report, receiving an assessment of the report from a user, the assessment indicating whether the threat actor performs the malicious activity with regard to the entity from a perspective of the user; and training the AI model using the assessment.

(B15) In the example method of any of B1-B14, wherein generating the profile of the threat actor comprises: generating a plurality of profiles of a plurality of threat actors using information that describes a plurality of behaviors of the plurality of threat actors, the plurality of threat actors comprising the threat actor; and wherein triggering the AI model to determine whether the threat actor performs the malicious activity with regard to the entity comprises: triggering the AI model to rank the plurality of profiles by assigning a plurality of ranks to the plurality of profiles based at least on a plurality of extents to which the plurality of profiles correspond to the potentially anomalous event by providing the AI prompt, which comprising the plurality of profiles and the description of the potentially anomalous event, as the input to the AI model, the AI prompt further requesting that the plurality of profiles be ranked with regard to the potentially anomalous event.

(C1) An example computer program product (Figure 5, 524; Figure 6, 618, 622) comprises a computer-readable storage medium having instructions recorded thereon for enabling a processor-based system (Figure 1, 102A-102M, 106A-106N; Figure 4, 400; Figure 5, 502; Figure 6, 600) to perform operations. The operations comprise receiving (Figure 2, 202) an alert (Figure 4, 428), which indicates that a potentially anomalous event has occurred with regard to an entity. The operations further comprise generating (Figure 2, 204) a profile (Figure 4, 442) of a threat actor using information that describes behavior of the threat actor. The operations further comprise providing (Figure 2, 206) an artificial intelligence (AI) prompt (Figure 4, 438) together with contextual information (Figure 4, 440) as inputs to an AI model (Figure 4, 414), which triggers the AI model to determine whether the threat actor performs a malicious activity with regard to the entity. The AI prompt requests a determination whether the threat actor performs the malicious activity with regard to the entity. The contextual information comprises the profile of the threat actor and a description (Figure 4, 444) of the potentially anomalous event. The operations further comprise receiving a response (Figure 4, 446) to the AI prompt from the AI model. The AI response indicates that the threat actor performs the malicious activity with regard to the entity. The operations further comprise as a result of the AI response indicating that the threat actor performs the malicious activity with regard to the entity, performing a security action (Figure 4, 454) with regard to the entity.

(D1) Techniques are described herein that are capable of performing AI-based malicious activity detection using a threat actor profile. An alert is received. The alert indicates that a potentially anomalous event has occurred with regard to an entity. A profile of a threat actor is generated using information that describes behavior of the threat actor. An artificial intelligence (AI) model is triggered to determine whether the threat actor performs a malicious activity with regard to the entity by providing an AI prompt as an input to the AI model. The AI prompt includes the profile of the threat actor and a description of the potentially anomalous event. The AI prompt requests a determination whether the threat actor performs the malicious activity with regard to the entity.

### III. Example Computer System

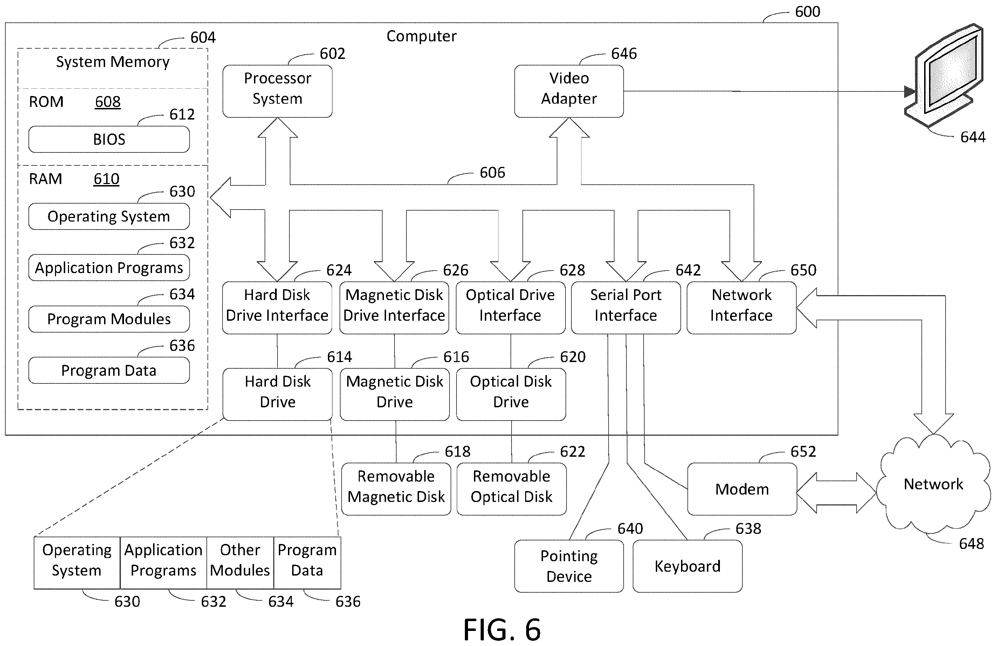

FIG. 6 depicts an example computer 600 in which embodiments may be implemented. Any one or more of the user devices 102A-102M and/or any one or more of the servers 106A-106N shown in FIG. 1 and/or the computing system 400 shown in FIG. 4 may be implemented using computer 600, including one or more features of computer 600 and/or alternative features. Computer 600 may be a general-purpose computing device in the form of a conventional personal computer, a mobile computer, or a workstation, for example, or computer 600 may be a special purpose computing device. The description of computer 600 provided herein is provided for purposes of illustration, and is not intended to be limiting. Embodiments may be implemented in further types of computer systems, as would be known to persons skilled in the relevant art(s).

As shown in FIG. 6, computer 600 includes a processor system 602, a system memory 604, and a bus 606 that couples various system components including system memory 604 to processor system 602. Bus 606 represents one or more of any of several types of bus structures, including a memory bus or memory controller, a peripheral bus, an accelerated graphics port, and a processor or local bus using any of a variety of bus architectures. System memory 604 includes read only memory (ROM) 608 and random access memory (RAM) 610. A basic input/output system 612 (BIOS) is stored in ROM 608.

Computer 600 also has one or more of the following drives: a hard disk drive 614 for reading from and writing to a hard disk, a magnetic disk drive 616 for reading from or writing to a removable magnetic disk 618, and an optical disk drive 620 for reading from or writing to a removable optical disk 622 such as a CD ROM, DVD ROM, or other optical media. Hard disk drive 614, magnetic disk drive 616, and optical disk drive 620 are connected to bus 606 by a hard disk drive interface 624, a magnetic disk drive interface 626, and an optical drive interface 628, respectively. The drives and their associated computer-readable storage media provide nonvolatile storage of computer-readable instructions, data structures, program modules and other data for the computer. Although a hard disk, a removable magnetic disk and a removable optical disk are described, other types of computer-readable storage media can be used to store data, such as flash memory cards, digital video disks, random access memories (RAMs), read only memories (ROM), and the like.

A number of program modules may be stored on the hard disk, magnetic disk, optical disk, ROM, or RAM. These programs include an operating system 630, one or more application programs 632, other program modules 634, and program data 636. Application programs 632 or program modules 634 may include, for example, computer program logic for implementing any one or more of (e.g., at least a portion of) the threat actor profile-based maliciousness detection logic 108, the threat actor profile-based maliciousness detection logic 408, the embedding model 412, the AI model 414, the security action logic 416, the analyst interaction logic 418, the training logic 420, the sampling logic 422, the prompt generation logic 424, the report generation logic 426, flowchart 200 (including any step of flowchart 200), and/or flowchart 300 (including any step of flowchart 300), as described herein.

A user may enter commands and information into the computer 600 through input devices such as keyboard 638 and pointing device 640. Other input devices (not shown) may include a microphone, joystick, game pad, satellite dish, scanner, touch screen, camera, accelerometer, gyroscope, or the like. These and other input devices are often connected to the processor system 602 through a serial port interface 642 that is coupled to bus 606, but may be connected by other interfaces, such as a parallel port, game port, or a universal serial bus (USB).

A display device 644 (e.g., a monitor) is also connected to bus 606 via an interface, such as a video adapter 646. In addition to display device 644, computer 600 may include other peripheral output devices (not shown) such as speakers and printers.

Computer 600 is connected to a network 648 (e.g., the Internet) through a network interface or adapter 650, a modem 652, or other means for establishing communications over the network. Modem 652, which may be internal or external, is connected to bus 606 via serial port interface 642.

As used herein, the terms "computer program medium" and "computer-readable storage medium" are used to generally refer to media (e.g., non-transitory media) such as the hard disk associated with hard disk drive 614, removable magnetic disk 618, removable optical disk 622, as well as other media such as flash memory cards, digital video disks, random access memories (RAMs), read only memories (ROM), and the like. A computer-readable storage medium is not a signal, such as a carrier signal or a propagating signal. For instance, a computer-readable storage medium may not include a signal. Accordingly, a computer-readable storage medium does not constitute a signal per se. Such computer-readable storage media are distinguished from and nonoverlapping with communication media (do not include communication media). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media, as well as wired media. Example embodiments are also directed to such communication media.

As noted above, computer programs and modules (including application programs 632 and other program modules 634) may be stored on the hard disk, magnetic disk, optical disk, ROM, or RAM. Such computer programs may also be received via network interface 650 or serial port interface 642. Such computer programs, when executed or loaded by an application, enable computer 600 to implement features of embodiments discussed herein. Accordingly, such computer programs represent controllers of the computer 600.

Example embodiments are also directed to computer program products comprising software (e.g., computer-readable instructions) stored on any computer-useable medium. Such software, when executed in one or more data processing devices, causes data processing device(s) to operate as described herein. Embodiments may employ any computer-useable or computer-readable medium, known now or in the future. Examples of computer-readable mediums include, but are not limited to storage devices such as RAM, hard drives, floppy disks, CD ROMs, DVD ROMs, zip disks, tapes, magnetic storage devices, optical storage devices, MEMS-based storage devices, nanotechnology-based storage devices, and the like.

It will be recognized that the disclosed technologies are not limited to any particular computer or type of hardware. Certain details of suitable computers and hardware are well known and need not be set forth in detail in this disclosure.

### IV. Conclusion

The foregoing detailed description refers to the accompanying drawings that illustrate exemplary embodiments of the present invention. However, the scope of the present invention is not limited to these embodiments, but is instead defined by the appended claims. Thus, embodiments beyond those shown in the accompanying drawings, such as modified versions of the illustrated embodiments, may nevertheless be encompassed by the present invention.

References in the specification to "one embodiment," "an embodiment," "an example embodiment," or the like, indicate that the embodiment described may include a particular feature, structure, or characteristic, but every embodiment may not necessarily include the particular feature, structure, or characteristic. Moreover, such phrases are not necessarily referring to the same embodiment. Furthermore, when a particular feature, structure, or characteristic is described in connection with an embodiment, it is submitted that it is within the knowledge of one skilled in the relevant art(s) to implement such feature, structure, or characteristic in connection with other embodiments whether or not explicitly described.

Descriptors such as "first", "second", "third", etc. are used to reference some elements discussed herein. Such descriptors are used to facilitate the discussion of the example embodiments and do not indicate a required order of the referenced elements, unless an affirmative statement is made herein that such an order is required.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims, and other equivalent features and acts are intended to be within the scope of the claims.

## Claims

1. A system comprising:
a processor system (510, 602); and
a memory (520, 522, 524, 604, 608, 610) that stores computer-executable instructions that are executable by the processor system to at least:
receive an alert (428), which indicates that a potentially anomalous event has occurred with regard to an entity;
generate a profile (442) of a threat actor using information that describes behavior of the threat actor, the profile indicating a plurality of behaviors that the threat actor is known to use;
trigger an artificial intelligence 'AI' model (414) to determine that the threat actor performs a malicious activity with regard to the entity by taking into consideration an extent to which the potentially anomalous event corresponds to the plurality of behaviors, wherein the AI model is triggered by providing an AI prompt (438) together with contextual information (440) as inputs to the AI model, the AI prompt requesting a determination whether the threat actor performs the malicious activity with regard to the entity, the contextual information comprising the profile of the threat actor and a description (444) of the potentially anomalous event, wherein the contextual information comprises context regarding the AI prompt; and
as a result of the AI model determining that the threat actor performs the malicious activity with regard to the entity, trigger execution of a remedial operation (454) with regard to the potentially anomalous event.

2. The system of claim 1, wherein the computer-executable instructions are executable by the processor system to at least:
reduce a likelihood that a determination of the AI model, which indicates that the threat actor performs the malicious activity with regard to the entity, is a false positive by providing the AI prompt together with the contextual information, which comprises the profile of the threat actor and the description of the potentially anomalous event, as the inputs to the AI model.

3. The system of claim 1 or claim 2, wherein the computer-executable instructions are executable by the processor system to at least:
identify the plurality of behaviors by analyzing embeddings that represent logs associated with the entity, wherein the plurality of behaviors are identified as a result of events, which are indicated by the embeddings, occurring more than a threshold number of times during a period of time.

4. The system of to any one of claims 1 to 3, wherein the contextual information further comprises a plurality of thresholds regarding the plurality of behaviors; and
wherein the computer-executable instructions are executable by the processor system to at least:
trigger the AI model to compare the description of the potentially anomalous event and the plurality of thresholds and to determine whether the threat actor performs the malicious activity with regard to the entity by taking into consideration whether the potentially anomalous event satisfies the plurality of thresholds.

5. The system of to any one of claims 1 to 4, wherein the computer-executable instructions are executable by the processor system to at least:
generate a plurality of profiles of a plurality of threat actors using information that describes a second plurality of behaviors of the plurality of threat actors, the plurality of threat actors comprising the threat actor; and
trigger the AI model to rank the plurality of profiles by assigning a plurality of ranks to the plurality of profiles based at least on a plurality of extents to which the plurality of profiles correspond to the potentially anomalous event by providing the AI prompt together with the contextual information as the inputs to the AI model, the AI prompt further requesting that the plurality of profiles be ranked with regard to the potentially anomalous event, the contextual information comprising the plurality of profiles and the description of the potentially anomalous event.

6. A method implemented by a computing system, the method comprising:
receiving (202) an alert, which indicates that a potentially anomalous event has occurred with regard to an entity;
generating (204) a profile of a threat actor using information that describes behavior of the threat actor; and
triggering (206) an artificial intelligence 'AI' model to determine whether the threat actor performs a malicious activity with regard to the entity by providing an AI prompt, which comprises the profile of the threat actor and a description of the potentially anomalous event, as an input to the AI model, the AI prompt requesting a determination whether the threat actor performs the malicious activity with regard to the entity.

7. The method of claim 6, wherein triggering the AI model to determine whether the threat actor performs the malicious activity with regard to the entity comprises:
triggering the AI model to determine that the threat actor performs the malicious activity with regard to the entity as a result of a maliciousness criterion being satisfied; and
wherein the method further comprises:
as a result of the maliciousness criterion being satisfied, triggering execution of a computer-executable instruction to block access of the threat actor to the entity.

8. The method of claim 6 or claim 7, wherein triggering the AI model to determine whether the threat actor performs the malicious activity with regard to the entity comprises one or more of:
triggering the AI model to determine that the threat actor performs the malicious activity with regard to the entity as a result of a similarity between the potentially anomalous event and the profile being greater than or equal to a similarity threshold;
triggering the AI model to determine whether the threat actor performs the malicious activity with regard to the entity by taking into consideration an extent to which the potentially anomalous event corresponds to the plurality of behaviors, wherein the profile indicates a plurality of behaviors that the threat actor is known to use;
triggering the AI model to compare the description of the potentially anomalous event and the plurality of thresholds and to determine whether the threat actor performs the malicious activity with regard to the entity by taking into consideration an extent to which the potentially anomalous event satisfies the plurality of thresholds, wherein the AI prompt further comprises a plurality of thresholds regarding the plurality of behaviors;
triggering the AI model to generate a report, which indicates whether the threat actor performs the malicious activity with regard to the entity, and wherein the method further comprises:
as a result of the AI model generating the report, receiving an assessment of the report from a user, the assessment indicating whether the threat actor performs the malicious activity with regard to the entity from a perspective of the user, and training the AI model using the assessment;
triggering the AI model to rank the plurality of profiles by assigning a plurality of ranks to the plurality of profiles based at least on a plurality of extents to which the plurality of profiles correspond to the potentially anomalous event by providing the AI prompt, which comprising the plurality of profiles and the description of the potentially anomalous event, as the input to the AI model, the AI prompt further requesting that the plurality of profiles be ranked with regard to the potentially anomalous event, wherein generating the profile of the threat actor comprises generating a plurality of profiles of a plurality of threat actors using information that describes a plurality of behaviors of the plurality of threat actors, the plurality of threat actors comprising the threat actor.

9. The method of to any one of claims 6 to 8, wherein generating the profile of the threat actor comprises:
identifying the plurality of behaviors by analyzing embeddings that represent logs associated with the entity, wherein the plurality of behaviors are identified as a result of events, which are indicated by the embeddings, occurring more than a threshold number of times during a period of time.

10. The method of any one of claims 6 to 9 wherein the AI prompt further comprises logs that are associated with the entity; and
wherein triggering the AI model to determine whether the threat actor performs the malicious activity with regard to the entity comprises:
triggering the AI model to compare the profile of the threat actor, the description of the potentially anomalous event, and the logs to determine whether the threat actor performs the malicious activity with regard to the entity.

11. The method of claim 10, further comprising one or more of:
selecting the logs from a plurality of logs, which are associated with the entity, as a result of embeddings, which represent the logs, satisfying a representation criterion;
selecting the logs from a plurality of logs, which are associated with the entity, as a result of the logs being associated with the potentially anomalous event.

12. The method of claim 10 or claim 11, further comprising:
determining that the logs comprise an identified event that corresponds to the potentially anomalous event by comparing first embeddings that represent the logs and a second embedding that represents the potentially anomalous event;
wherein the AI prompt further comprises a statement that the identified event in the logs corresponds to the potentially anomalous event; and
wherein triggering the AI model to determine whether the threat actor performs the malicious activity with regard to the entity comprises:
triggering the AI model to compare the profile of the threat actor, the description of the potentially anomalous event, the logs, and the statement that the identified event in the logs corresponds to the potentially anomalous event to determine whether the threat actor performs the malicious activity with regard to the entity.

13. The method of any one of claims 6 to 12, wherein generating the profile comprises:
triggering the AI model to generate the profile by providing a second AI prompt as an input to the AI model;
wherein the second AI prompt comprises at least one of the following:
a historical log that indicates behavior of the threat actor,
an intelligence report that indicates a method used by the threat actor to perform a malicious attack, or
information regarding a historical attack associated with the threat actor; and
wherein the second AI prompt requests generation of the profile using a specified structure.

14. The method of any one of claims 6 to 13, further comprising:
in response to providing the AI prompt as the input to the AI model, receiving an AI-generated request from the AI model, the AI-generated request asking for feedback regarding a determination made by the AI model that the threat actor performs the malicious activity with regard to the entity;
in response to receiving the AI-generated request from the AI model, providing a representation of the AI-generated request to a security analyst via a user interface;
receiving a response to the representation of the AI-generated request from the security analyst, the response comprising the feedback that is requested by the AI model; and
in response to receiving the response from the security analyst, providing the feedback to the AI model.

15. A computer program product (524, 628, 622) comprising a computer-readable storage medium having instructions recorded thereon for enabling a processor-based system (102A-102M, 106A-106N, 400, 502, 600) to perform operations, the operations comprising:
receiving (202) an alert (428), which indicates that a potentially anomalous event has occurred with regard to an entity;
generating (204) a profile (442) of a threat actor using information that describes behavior of the threat actor;
providing (206) an artificial intelligence 'AI' prompt (438) together with contextual information (440) as inputs to an AI model (414), which triggers the AI model to determine whether the threat actor performs a malicious activity with regard to the entity, the AI prompt requesting a determination whether the threat actor performs the malicious activity with regard to the entity, the contextual information comprising the profile of the threat actor and a description of the potentially anomalous event;
receiving a response (446) to the AI prompt from the AI model, the AI response indicating that the threat actor performs the malicious activity with regard to the entity; and
as a result of the AI response indicating that the threat actor performs the malicious activity with regard to the entity, performing a security action (454) with regard to the entity.
